Europäisches Patentamt

European Patent Office

Office européen des brevets

(11) Veröffentlichungsnummer: **0 144 462**
**B1**

(12) **EUROPÄISCHE PATENTSCHRIFT**

(45) Veröffentlichungstag der Patentschrift:
04.11.87

(51) Int. Cl.⁴: **G 01 J 3/46**

(21) Anmeldenummer: **83112578.6**

(22) Anmeldetag: **14.12.83**

(54) Verfahren und Einrichtung zur Herstellung von Farbauszügen für den Einzelfarbendruck.

(43) Veröffentlichungstag der Anmeldung:
**19.06.85 Patentblatt 85/25**

(45) Bekanntmachung des Hinweises auf die Patenterteilung:
**04.11.87 Patentblatt 87/45**

(84) Benannte Vertragsstaaten:
**AT BE CH DE FR GB IT LI NL SE**

(56) Entgegenhaltungen:
**DE-A-2 118 720**
**DE-A-2 923 468**
**DE-C-2 628 053**
**DE-C-2 853 511**

**ZEITSCHRIFT FÜR ANGEWANDTE CHEMIE, Band 87, Nr. 20, 1975, H.G. VÖLZ "Optische Eigenschaften von Pigmenten und objektive Methoden zu ihrer Prüfung und Bewertung", Seiten 721-750**

(73) Patentinhaber: **DR.- ING. RUDOLF HELL GmbH, Grenzstrasse 1-5, D-2300 Kiel 14 (DE)**

(72) Erfinder: **Jung, Eggert, Mühlenberg 25, D-2306 Schönberg (DE)**
Erfinder: **Hoffrichter, Ingo, Willy- Jacob- Weg 12, D-2300 Kiel 14 (DE)**

**Beschreibung**

Die Erfindung bezieht sich auf das Gebiet der elektronischen Reproduktionstechnik für den Einzelfarbendruck und betrifft ein Verfahren und eine Einrichtung zur Herstellung von Farbauszügen für den Einzelfarbendruck. Unter Einzelfarbendruck wird z. B. der Textil-, Dekor- oder Verpackungsdruck verstanden.

Während der Farbauftrag auf das Druckmedium beim Mehrfarben-Mischdruck durch Übereinanderdrucken unterschiedlicher Anteile der Druckfarben "Gelb", "Magenta", "Cyan" und "Schwarz" erfolgt, wird beim Einzelfarbendruck jede zu druckende Farbe vor dem Druckprozeß ermischt und dann getrennt auf das Druckmedium übertragen, so daß für jede Farbe einer Farbvorlage ein entsprechender Farbauszug hergestellt werden muß.

Eine solche Farbvorlage weist beispielsweise Farbtöne mit einer verlaufenden Farbverteilung, d. h. mit einer unterschiedlichen Farbsättigung und/oder Helligkeit innerhalb der einzelnen Farbtöne, auf. In diesem Falle müssen die Farbauszüge sowohl eine Aussage über die örtliche Verteilung der Einzelfarben als auch eine Aussage über den Farbverlauf, d. h. über die örtlich unterschiedliche Stärke des Farbauftrages liefern.

Aus der DE-C-26 28 053 ist bereits eine Einrichtung zur Herstellung von Farbauszügen für den Einzelfarbendruck bekannt. Durch punkt- und zeilenweise optoelektronische Abtastung einer Farbvorlage werden drei primäre Farbmeßwert-Signale gewonnen, welche die Farbanteile Rot, Grün und Blau der abgetasteten Bildpunkte repräsentieren. Eine mit den Farbmeßwert-Signalen beaufschlagte Farberkennungs-Schaltung, in der innerhalb eines Farbraumes ein Farb-Erkennungsbereich für eine auszuziehende Farbe (Auszugsfarbe) in der Farbvorlage abgegrenzt ist, selektiert bei der Vorlagen-Abtastung die ausgewählte Auszugsfarbe von den anderen Farben der Farbvorlage und erzeugt immer dann ein Farberkennungssignal, wenn die ausgewählte Auszugsfarbe in der Farbvorlage erkannt wird. Das Farberkennungssignal wird als Farbauszugssignal an ein Aufzeichnungsorgan, z. B. an eine Schreiblampe, gegeben, deren Helligkeit in Abhängigkeit des Farbauszugssignals moduliert wird. Die Schreiblampe belichtet punkt- und zeilenweise einen Film als Aufzeichnungsmedium, der nach der Entwicklung den Farbauszug für die ausgewählte Auszugsfarbe darstellt.

Die bekannte Einrichtung hat den Nachteil, daß im wesentlichen nur prismatische Farberkennungsräume abgegrenzt werden können. Die Farberkennungsräume lassen sich daher nicht optimal nach Form und Größe an die durch die Farbverläufe der Auszugsfarben vorgegebenen Farbbereiche anpassen, wodurch das Farbauszugssignal keine eindeutige Aussage über die Farbsättigung und/oder Helligkeit der Auszugsfarben liefert.

Eine andere Einrichtung zur Herstellung von Farbauszügen für den Einzelfarbendruck wird in der DE-C-28 53 511 beschrieben. Bei dieser Einrichtung werden aus den Farbmeßwert-Signalen korrigierte Farbauszugssignale abgeleitet und eines der korrigierten Farbauszugssignale zur Aufzeichnung eines Farbauszugs für den Einzelfarbendruck ausgewählt. Mit Hilfe einer Farberkennungs-Schaltung, in der wiederum ein Farberkennungsraum für die Auszugsfarbe abgegrenzt ist, wird ein Farberkennungssignal erzeugt, welches eine Ja/Nein-Aussage über das Vorhandensein der ausgewählten Auszugsfarbe in der Farbvorlage liefert. Während der Aufzeichnung des Farbauszuges schaltet das Farberkennungssignal das ausgewählte korrigierte Farbauszugssignal immer dann zur Schreiblampe durch, wenn die voreingestellte Auszugsfarbe in der Farbvorlage erkannt wird. Durch das Schalten erscheinen die Farbverteilungen in den Farbauszügen scharf umrissen, so daß die einzelnen Auszugsfarben beim späteren Druck exakt nebeneinandergedruckt werden. Dies kann gelegentlich zu störenden Abrissen von Farbverläufen im Druck führen.

Aus der europäischen Patentanmeldung Nr. 82 112 002.9 (EP-A-106 918) ist eine Variante der zuvor beschriebenen Einrichtung bekannt, bei der die Bildung solcher Abrisse zwar reduziert ist, dennoch wird auch dort kein verlaufendes Farbauszugssignal erzeugt, welches einen Farbverlauf exakt wiedergibt.

Alle bekannten Einrichtungen haben außerdem den Nachteil, sie nicht speziell zum Ausziehen von Farbtönen ausgebildet sind.

Der im Anspruch 1 angegebenen Erfindung liegt daher die Aufgabe zugrunde, ein Verfahren und eine Einrichtung zur Herstellung von Farbauszügen für den Einzelfarbendruck anzugeben, mit denen sich Auszugsfarbtöne sowie Auszugsfarben hinsichtlich Farbton, Farbsättigung und Helligkeit optimal abgrenzen lassen, und mit denen Farbauszugssignale erzeugt werden, welche Farbverläufe genau wiedergeben.

Die angegebene Erfindung ermöglicht außerdem bei der Aufzeichnung von Farbauszügen eine exakte Trennung der ausgewählten Farbtöne von ihren Komplementärfarbtönen bzw. von Farbtönen im Graubereich.

Da das physiologische Farbempfinden des Menschen und die Abgrenzung der Erkennungsräume bei der angegebenen Erfindung in den Begriffen Farbton, Farbsättigung und Helligkeit ablaufen, hat die Erfindung außerdem den Vorteil, daß die Abgrenzung von Erkennungsräumen für den Bediener überprüfbar ist.

Die Erfindung wird im folgenden anhand der Figuren 1 bis 12 näher erläutert. Es zeigen:

Figur 1 ein Ausführungsbeispiel für eine Einrichtung zur Herstellung von Farbauszügen;

Figur 2 eine graphische Darstellung zur Koordinaten-Drehung;

Figur 3 eine graphische Darstellung von Signalverläufen;

Figur 4 eine graphische Darstellung von Signalverläufen;

Figur 5 eine graphische Darstellung von Signalverläufen;

Figur 6 eine graphische Darstellung von Signalverläufen;

Figur 7 eine graphische Darstellung von Signalverläufen;

Figur 8 ein Ausführungsbeispiel für ein optoelektronische Abtastorgan;

Figur 9 ein Ausführungsbeispiel für eine Transformations-Stufe;

Figur 10a ein Ausführungsbeispiel für einen Signalgenerator;

Figur 10b eine graphische Darstellung;

Figur 11 eine Ausführungsbeispiel für einen Farbsättigungs-Signalgenerator;

Figur 12 ein Ausführungsbeispiel für eine Begrenzer-Stufe.

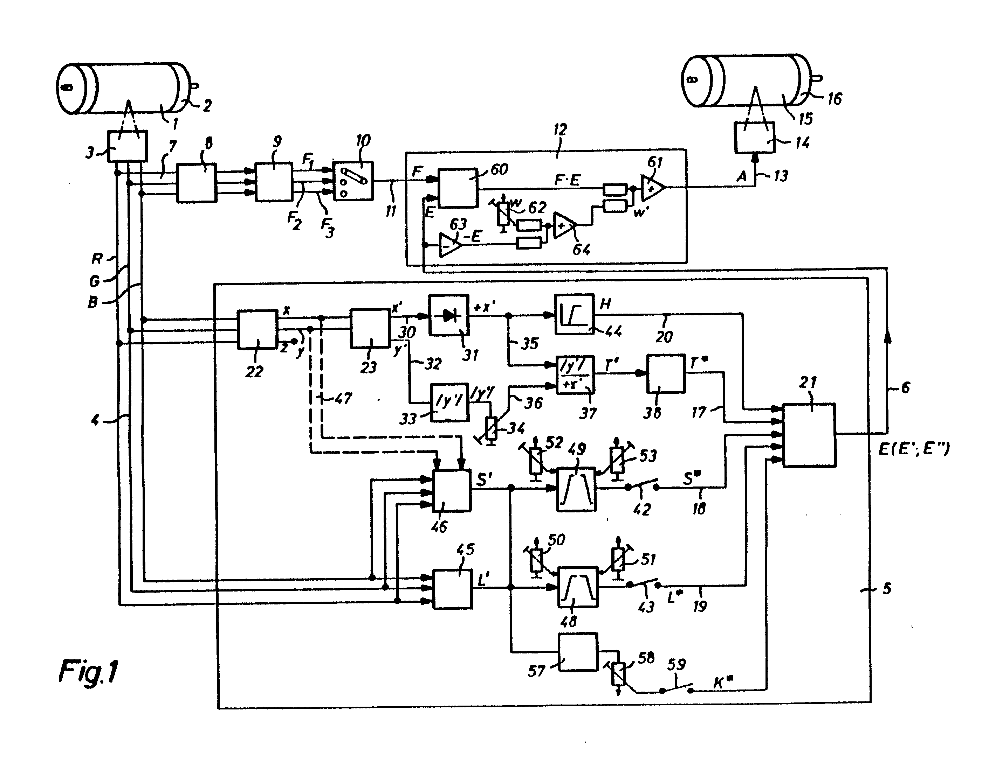

Fig. 1 zeigt ein Ausführungsbeispiel für eine Einrichtung zur Herstellung von Farbauszügen für den Einzelfarbendruck, nachfolgend mit Farbscanner für den Einzelfarbendruck bezeichnet.

Wie bereits in der Beschreibungseinleitung dargelegt, wird beim Einzelfarbendruck abweichend vom Mehrfarben-Mischdruck jede zu druckende Einzelfarbe vor dem Druckprozeß ermischt und die verschiedenen Einzelfarben in getrennten Vorgängen auf das Druckmedium übertragen. Beim Einzelfarbendruck muß daher für jeden auszuziehenden Einzelfarbton bzw. für jede auszuziehende Einzelfarbe der zu reproduzierenden Farbvorlage ein entsprechender Farbauszug hergestellt werden, wobei es darauf ankommt, daß die Farbverläufe der Farbvorlage in den Farbauszügen möglichst gut wiedergegeben werden.

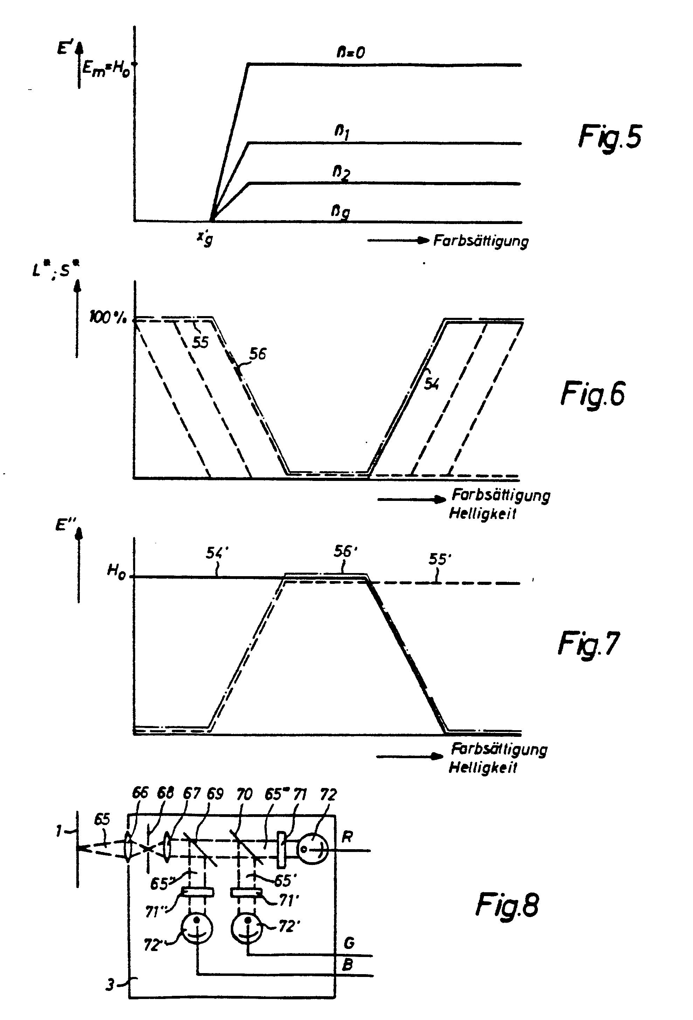

Die Farbvorlage 1, von der die entsprechenden Farbauszuge für den Einzelfarbendruck hergestellt werden sollen, befindet sich auf einer rotierenden Abtasttrommel 2 eines nicht näher dargestellten Farbscanners und wird von einem optoelektronischen Abtastorgan 3 punkt- und zeilenweise, trichromatisch abgetastet. Das von der abgetasteten Farbvorlage 1 reflektierte oder durchgelassene Abtastlicht wird im optoelektronischen Abtastorgan 3 mit Hilfe von Farbteilern, Korrekturfiltern und optoelektronischen Wandlern in die Farbmeßwert-Signale R, G und B umgewandelt, welche ein Maß für die Intensitäten der Grundfarbenanteile "Rot", "Grün" und "Blau" an den abgetasteten Farben sind. Die Farbmeßwert-Signale R, G und B stellen die Raum- oder Farbkoordinaten der Farborte der abgetasteten Farben in dem kartesischen RGB-Farbraum dar. Das optoelektronische Abtastorgan 3, welches axial zur Abtasttrommel 2 verschiebbar ist, wird sowohl zum Ausmessen einzelner Farbpunkte in der Farbvorlage 1 als auch zum flächenmäßigen, punkt- und zeilenweisen Abtasten der Farbvorlage 1 während der eigentlichen Aufzeichnung der Farbauszüge verwendet. Ein Ausführungsbeispiel für ein optoelektronisches Abtastorgan zeigt Fig. 8. Die Farbmeßwert-Signale R, G und B gelangen über Leitungen 4 an eine Erkennungs-Schaltung 5, die, wie noch ausführlich erläutert wird, jeweils auf denjenigen Einzelfarbton oder diejenige Einzelfarbe der Farbvorlage 1, nachfolgend mit Auszugsfarbton bzw. Auszugsfarbe bezeichnet, voreingestellt ist, von dem oder von der momentan ein Farbauszug aufgezeichnet werden soll. Die Erkennungs-Schaltung 5 gibt ein entsprechendes Erkennungs-Signal E auf einer Leitung 6 ab.

Die im optoelektronischen Abtastorgan 3 gewonnenen Farbmeßwert-Signale R, G und B werden gleichzeitig über Leitungen 7 auf eine Logarithmier-Stufe 8 gegeben, in der sie in Farbmeßwert-Signale R', G' und B' logarithmiert oder teillogarithmiert werden. Der Logarithmier-Stufe 8 ist eine Korrektur-Schaltung 9 zur Farb- und/oder Tonwertkorrektur nachgeschaltet. Diese Korrektur-Schaltung 9 kann z. B. ein Farbrechner für den Mehrfarben-Mischdruck sein. Die Korrektur-Schaltung 9 erzeugt Farbsignale $F_1$, $F_2$ und $F_3$, die je nach Einstellung der Korrekturregler in der Korrektur-Schaltung 9 den Farbauszugs-Signalen Y, M und C für den Mehrfarben-Mischdruck, den unkorrigierten Farbmeßwert-Signalen R', G' und B' oder aber auch Zwischenwerten entsprechen können.

Die Farbsignale $F_1$, $F_2$ und $F_3$ werden einem Auswahl-Schalter 10 zugeführt, mit dem dasjenige Farbsignal F ausgewählt wird, welches für die Aufzeichnung des betreffenden Farbauszug am besten geeignet ist, welches beispielsweise den Farbverlauf des Auszugsfarbtons bzw. der Auszugsfarbe am besten wiedergibt.

Aus dem ausgewählten Farbsignal F auf einer Leitung 11 und dem Erkennungs-Signal E auf der Leitung 6 werden in einer Misch-Schaltung 12 ein Einzelfarbenauszugs-Signal A gebildet, welches über eine Leitung 13 an ein Aufzeichnungsorgan 14 in Form einer Schreiblampe gegeben wird. Die Schreiblampe, deren Helligkeit von dem Einzelfarbenauszugs-Signal A moduliert wird, belichtet punkt- und zeilenweise ein Aufzeichnungsmedium 15, z. B. einen Film, der auf einer rotierenden Aufzeichnungstrommel 16 des Farbscanners aufgespannt ist. Der belichtete und entwickelte Film ist der gewünschte Farbauszug.

In der Erkennungs-Schaltung 5 werden aus den zugeführten Farbmeßwert-Signalen R, G und B ein Farbton-Steuersignal T* auf einer Leitung 17, ein Farbsättigungs-Steuersignal S* auf einer Leitung 18, ein Luminanz-Steuersignal L* auf einer Leitung 19 sowie ein Hilfssteuersignal H auf einer Leitung 20 erzeugt. Farbton-Steuersignal T*, Farbsättigungs-Steuersignal S*, Luminanz-Steuersignal L* sowie das Hilfssteuersignal H werden miteinander in einer Verknüpfungs-Stufe 21 zu dem Erkennungs-Signal E auf der Leitung 6 verknüpft.

Wenn in der Erkennungs-Schaltung 5 ein Auszugsfarbton einzustellen ist, wird ein sektorförmiger Farbton-Erkennungsbereich in der Chrominanzebene um einen in allen vier Quadranten frei wählbaren Auszugsfarbton $T_0$ abgegrenzt. In diesem Fall ist das Erkennungs-Signal E auf der Leitung 6 ein Farbton-Erkennungssignal E', das in der Verknüpfungs-Stufe 21 aus dem Farbton-Steuersignal T* und dem Hilfssteuersignal H gewonnen wird. Bei der punkt- und zeilenweisen Abtastung der Farbvorlage 1 während der eigentlichen Aufzeichnung des Farbauszuges liefert das Farbton-Erkennungssignal E' eine Aussage über den Abstand der Farbtöne der abgetasteten Farben zu dem eingestellten Auszugsfarbton $T_0$, falls die Farbtöne der abgetasteten Farben innerhalb des abgegrenzten Farbton-Erkennungsbereiches liegen, anderenfalls ist das Farbton-Erkennungssignal E' gleich Null.

Wenn die Erkennungs-Schaltung 5 auf eine Auszugsfarbe einzustellen ist, wird der sektorförmige Farbton-Erkennungsbereich zusätzlich noch hinsichtlich der Helligkeit und der Farbsättigung abgegrenzt, so daß ein dreidimensionaler Farb-Erkennungsbereich um den Auszugsfarbton $T_0$ entsteht. In diesem Falle ist das Erkennungs-Signal E ein Farb-Erkennungssignal E'', welches durch eine zusätzliche Verknüpfung des Farbton-Steuersignals T* und des Hilfssteuersignals H bzw. des Farbton-Erkennungssignals E' mit dem Farbsättigungs-Steuersignal S* und/oder Luminanz-Steuersignal L* in der Verknüpfungs-Stufe 21 gebildet wird.

Aufbau und Wirkungsweise der Erkennungs-Schaltung 5 sollen nachfolgend näher erläutert werden, und zwar zunächst für den Fall, daß die Erkennungs-Schaltung 5 auf einen Auszugsfarbton einzustellen ist.

Die vom optoelektronischen Abtastorgan 3 über die Leitung 4 gelieferten Farbmeßwert-Signale R, G und B werden in einer Umformer-Stufe 22 in Farbmeßwert-Signale R', G' und B' logarithmiert oder teillogarithmiert, gegebenenfalls nach einer Gradationskurve korrigiert und durch eine Matrizierung gemäß Gleichungen (2) in Chrominanz-Signale x und y und in ein Luminanz-Signal z umgeformt.

$$x = a_{11}R' + a_{12}G' + a_{13}B'$$
$$y = a_{21}R' + a_{22}G' + a_{23}B'$$
$$z = a_{31}R' + a_{32}G' + a_{33}B' \quad (2)$$

Die Matrizierung entspricht einer Transformation der Farbkoordinaten des kartesischen RGB-Farbraumes in die Farbkoordinaten x, y und z des kartesischen Chrominanz/Luminanz-Farbraumes, wobei die Farbkoordinaten x und y die Lage der Farborte der Farben in der Chrominanzebene und die Farbkoordinate z die Helligkeitswerte der Farben kennzeichnen. Farbton (T), Farbsättigung (S) und Luminanz (L) sind die zylindrischen Farbkoordinaten des Farbton/Farbsättigungs/Luminanz-Farbraumes, wobei die Lage der Farborte in dessen Chrominanzebene durch die Farbtonwerte T als Winkel und durch die Farbsättigungswerte S als Radien festgelegt sind, während die Helligkeitswerte der Farben durch die Luminanz L bestimmt werden. Dabei bestehen zwischen den Farbkoordinaten x, y und z des Chrominanz/Luminanz-Farbraumes und den Farbkoordinaten Farbton T, Farbsättigung S und Luminanz L des Farbton/Farbsättigung/Luminanz-Farbraumes folgende Zusammenhänge:

$$T = c_1 \arctan \tfrac{y}{x}$$
$$S = c_2 \sqrt{x^2 + y^2}$$
$$L = c_3 z \quad (1)$$

Zunächst wird der gewünschte Auszugsfarbton $T_0$, um den ein Farbton-Erkennungsbereich abgegrenzt werden soll, durch Vorgabe eines Farbmeßwert-Tripels $R_0$, $G_0$ und $B_0$ bzw. seiner durch Matrizierung gebildeten Chrominanzwerte $x_0$ und $y_0$ oder durch Ausmessen eines Probenpunktes in der Farbvorlage 1 mit Hilfe des optoelektronischen Abtastorgans 3 definiert.

Die Chrominanzwerte $x_0$ und $y_0$ werden erfindungsgemäß durch eine auf den ausgewählten Auszugsfarbton $T_0$ einstellbare Matrizierung nach Gleichungen (3) in entsprechende Chrominanzwerte $x'_0$ und $y'_0$ transformiert, wobei die Transformationskoeffizienten a, b, c und d so bestimmt werden, daß die Bedingungen $x'_0 > 0$ und $y'_0 = 0$ erfüllt sind.

$$x'_0 = bx_0 + cy_0$$
$$y'_0 = -dx_0 + ey_0 \quad (3)$$

Im gewählten Ausführungsbeispiel werden vorzugsweise Transformationskoeffizienten der Form $b = e = \cos\alpha$ und $c = -d = \sin\alpha$ verwendet, so daß die Matrizierung einer Drehung eines X'Y'-Farbkoordinatensystems um einen Winkel gegenüber dem ursprünglichen XY-Farbkoordinatensystem nach Gleichung (4) entspricht.

$$x'_0 = x_0 \cos\alpha + y_0 \sin\alpha$$
$$y'_0 = -x_0 \sin\alpha + y_0 \cos\alpha \quad (4)$$

Der zur Erfüllung der Bedingungen $x'_0 > 0$ und $y'_0 = 0$ erforderliche Winkel $\alpha_0$ wird in einer Transformations-Stufe 23 durch einen automatischen Abgleichvorgang bei laufender Überprüfung der Bedingungen $x'_0 > 0$ und $y'_0 = 0$ in einer Überwachungs-Stufe innerhalb der Transformations-Stufe 23 bestimmt, indem der Winkel so lange verändert wird, bis die Überwachungs-Stufe die Erfüllung der Bedingungen festgestellt hat. Der gefundene Winkel $\alpha_0 = \arctan y_0/x_0$ entspricht dem Auszugsfarbton $T_0$, und die X'-Achse des um den Winkel $\alpha_0$ gedrehten X'Y'-Farbkoordinatensystems verläuft durch den in die Chrominanzebene transformierten Farbort $F'_0$ des

Auszugsfarbton $T_0$. Die beschriebene Koordinaten-Drehung entspricht einer Drehung des Chrominanz/Luminanz-Farbraumes um die Luminanz-Achse (Z).

Der gefundene Winkel $\alpha_0$ wird in der Transformations-Stufe 23 gespeichert und bei der eigentlichen Farbton- bzw. Farb-Erkennung während der Aufzeichnung des Farbauszugs zur laufenden Transformation der Chrominanz-Signale x und y in die gedrehten Chrominanz-Signale x' und y' gemäß Gleichungen (5) verwendet, wobei das gedrehte Chrominanz-Signal y' von Null verschieden ist für alle Farbtöne der abgetasteten Farben, die von dem ausgewählten Auszugsfarbton $T_0$ abweichen, und gleich Null ist für alle Farbtöne, die mit dem ausgewählten Auszugsfarbton $T_0$ übereinstimmen.

$$x' = x \cos \alpha_0 + y \sin \alpha_0$$
$$y' = -x \sin \alpha_0 + y \cos \alpha_0 \quad (5)$$

Es liegt im Rahmen der Erfindung, die Matrizierung nach Gleichungen (2), (4) und (5) in einem einzelnen Schritt durchzuführen.

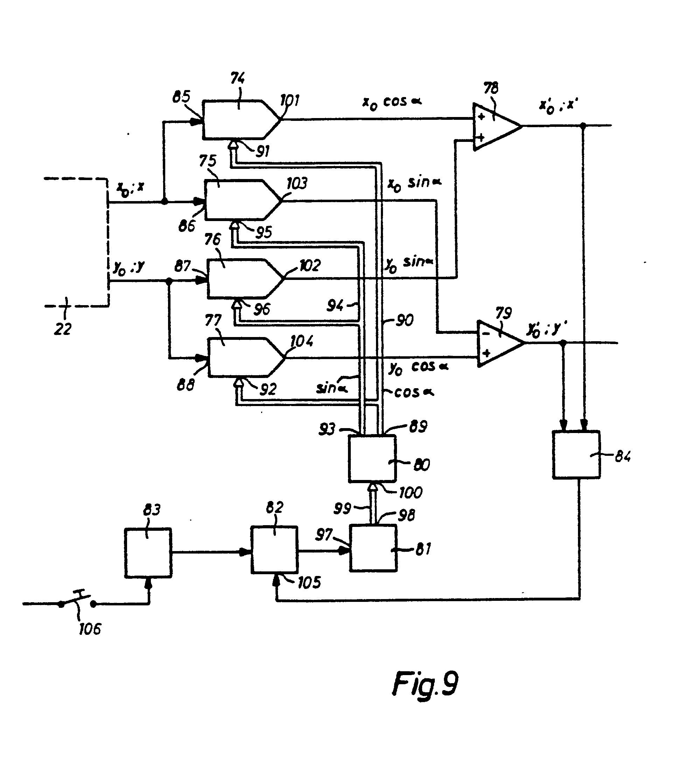

Ein detailliertes Ausführungsbeispiel für die Transformations-Stufe 23 wird in Fig. 9 angegeben.

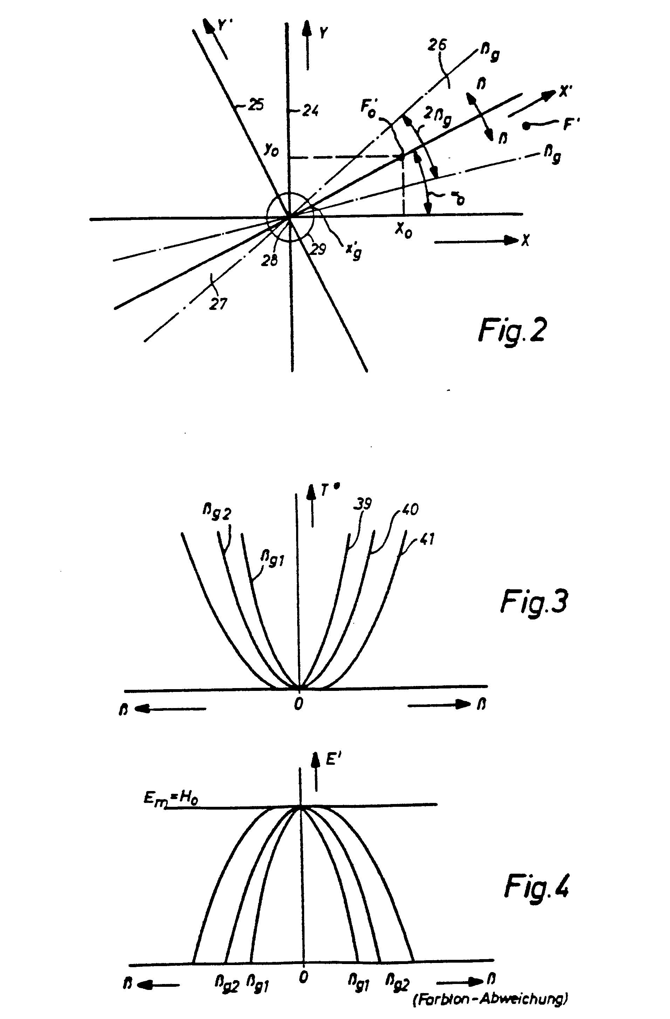

Die zuvor beschriebene Koordinaten-Drehung wird anhand einer grafischen Darstellung in Fig. 2 nochmals verdeutlicht.

Fig. 2 zeigt die Chrominanzebene des Chrominanz/Luminanz-Farbraumes mit dem XY-Farbkoordinatensystem 24, wobei die Z-Achse (Grauachse) des Chrominanz/Luminanz-Farbraumes senkrecht zur Chrominanzebene verläuft. Ein transformierter Farbort $F'_0$ eines ausgewählten Auszugsfarbtons $T_0$ ist im XY-Farbkoordinatensystem 24 durch die Farbkoordinaten $x_0$ und $y_0$ definiert. Gleichzeitig ist das um den Winkel $\alpha_0$ gedrehte X'Y'-Farbkoordinatensystem 25 dargestellt, dessen X'-Achse durch den transformierten Farbort $F'_0$ verläuft, so daß der transformierte Farbort $F'_0$ im gedrehten X'Y'-Farbkoordinatensystem 25 die Farbkoordinaten $x'_0 > 0$ und $y'_0 = 0$ aufweist.

Der Winkel $\alpha_0 = \text{arc atn } y_0/x_0$ entspricht dem Auszugsfarbton $T_0$ im XY-Farbkoordinatensystem 24. Gleichzeitig ist symmetrisch zur X'-Achse des gedrehten X'Y'-Farbkoordinatensystems 25 ein sektorförmiger Farbton-Erkennungsbereich 26 darstellt, dessen Grenzwinkel $\beta_g$ (Öffnungswinkel $2\beta_g$), bezogen auf die X'-Achse zur Eingrenzung der Auszugsfarbtöne, einstellbar ist. Für einen beliebigen Farbort F' innerhalb des Farbton-Erkennungsbereiches 26 entspricht in erster Näherung bei kleinem Winkel $\beta$ das gedrehte Chrominanz-Signal x' der Farbsättigung und der Quotient $y'/x' = \tan \beta$ der Abweichung der Farbtöne der abgetasteten Farben von dem gewählten Auszugsfarbton $T_0$, wobei der Quotient mit wachsender Abweichung ansteigt.

Außerdem zeigt Fig. 2 noch die zu den abgegrenzten Auszugsfarbtönen gehörenden Komplementärfarbtöne innerhalb eines Sektors 27, der durch Spiegelung des Farbton-Erkennungsbereiches 26 an der Y'-Achse des X'Y'-Farbkoordinatensystems 25 entstanden ist. Das gedrehte Chrominanz-Signal x' ist für die abgegrenzten Auszugsfarbtöne positiv, dagegen für die Komplementärfarbtöne negativ. Bei der Herstellung von Farbauszügen erweist es sich oft als notwendig, um die Grauachse 28 einen zylindrischen oder tonnenförmigen Farberkennungsraum für "Grau" abzugrenzen, damit Farbschwankungen oder Verläufe im Grau als einheitliches Grau erkannt und aufgezeichnet werden. Von einem solchen Farberkennungsraum für "Grau" ist in Fig. 2 noch die kreisförmige Schnittfläche 29 dargestellt, deren Radius durch einen Grenz-Farbsättigungswert $x'_g$ definiert ist.

Zurück zu Fig. 1

Das in der Transformations-Stufe 23 erzeugte gedrehte Chrominanz-Signal x' wird über eine Leitung 30 einer Auswahl-Stufe 31 in Form einer Diodenschaltung zugeführt, welche nur die positiven Werte des gedrehten Chrominanz-Signals x' als Signal +x' durchläßt. Am Ausgang der Auswahl-Stufe 31 erscheint somit immer nur dann ein Signal, wenn die Farbtöne der von der Farbvorlage 1 abgetasteten Farben, bezogen auf die Y'-Achse des gedrehten X'Y'-Farbkoordinatensystems 25 (Fig. 2), auf der Seite des abgegrenzten Farbton-Erkennungsbereiches 26 liegen, wenn es sich also um keine Komplementärfarbtöne handelt, so daß in vorteilhafter Weise eine exakte Trennung von Farbtönen und Komplementärfarbtönen erreicht wird.

Das gedrehte Chrominanz-Signal y' gelangt von der Transformations-Stufe 23 über eine Leitung 32 auf eine Betrags-Stufe 33. In der Betrags-Stufe 33 wird der Betrag des gedrehten Chrominanz-Signals y' als Signal /y'/ gebildet.

Durch amplitudenmäßige Einstellung des Signals /y'/ mittels eines Potentiometers 34 wird der Grenzwinkel $\beta_g$ für den gewünschten Farbton-Erkennungsbereich 26 (Fig. 2) festgelegt. Die Signale +x' und /y'/ werden über Leitungen 35 und 36 einer Dividier-Stufe 37 zugeführt, in der durch Quotientenbildung das Farbton-Signal T' gemäß Gleichung (6) gewonnen wird.

$$T' = \frac{/y'/}{+x'} = \tan \beta \quad (6)$$

Das Farbton-Signal T' liefert eine eindeutige Aussage über die betragsmäßige Abweichung der Farbtöne der auf der Farbvorlage 1 abgetasteten Farben von dem eingestellten Auszugsfarbton $T_0$ nach beiden Richtungen hin, wobei bei Farbton-Übereinstimmung T' = 0 ist.

Durch die erfindungsgemäße Koordinatendrehung bei der Bildung des Farbton-Signals T' werden die üblichen Schwierigkeiten bei der Bildung eines farbtonkennzeichnenden Signals, die sich aufgrund der Doppeldeutigkeit der Tangensfunktion und der Unsymmetrie innerhalb eines Quadranten ergeben, in vorteilhafter Weise vermieden und somit eine exakte Farbtontrennung erreicht.

Das Farbton-Signal T' wird in einer der Dividier-Stufe 37 nachgeschalteten Signalformer-Stufe 38 in das Farbton-Steuersignal T* auf der Leitung 17 umgewandelt.

Fig. 3 zeigt verschiedene Verläufe des Farbton-Steuersignals T* in Abhängigkeit des Winkels $\beta$. Die Verläufe 39 und 40 ergeben sich bei unterschiedlich eingestellten Grenzwinkeln $\beta_g$ des Farbton-Erkennungsbereiches für den Fall, daß in der Signalformer-Stufe 38 keine Signalbeeinflussung stattfindet und das Farbton-Steuersignal T* dem Farbton-Signal T' entspricht. Mit Hilfe der Signalformer-Stufe 38 kann das Farbton-Signal T' amplituden- und formmäßig noch verändert werden, so daß beispielsweise das Farbton-Steuersignal T* im Bereich kleiner Winkel $\beta$ nach Verlauf 41 verflacht wird.

Aus dem Farbton-Steuersignal T* auf der Leitung 17 und dem Hilfssteuersignal H auf der Leitung 20 wird in der Verknüpfungs-Stufe 21, die im Ausführungsbeispiel als Subtrahier-Stufe ausgebildet ist, das Farbton-Erkennungssignal E' auf der Leitung 6 gemäß Gleichung (7) gewonnen, wobei sich die beiden Schalter 42 und 43 in der dargestellten, geöffneten Position befinden.

$$E' = H - T^* \quad (7)$$

Alternativ kann die Verknüpfung von Hilfssteuersignal H und Farbton-Steuersignal T* auch multiplikativ erfolgen.

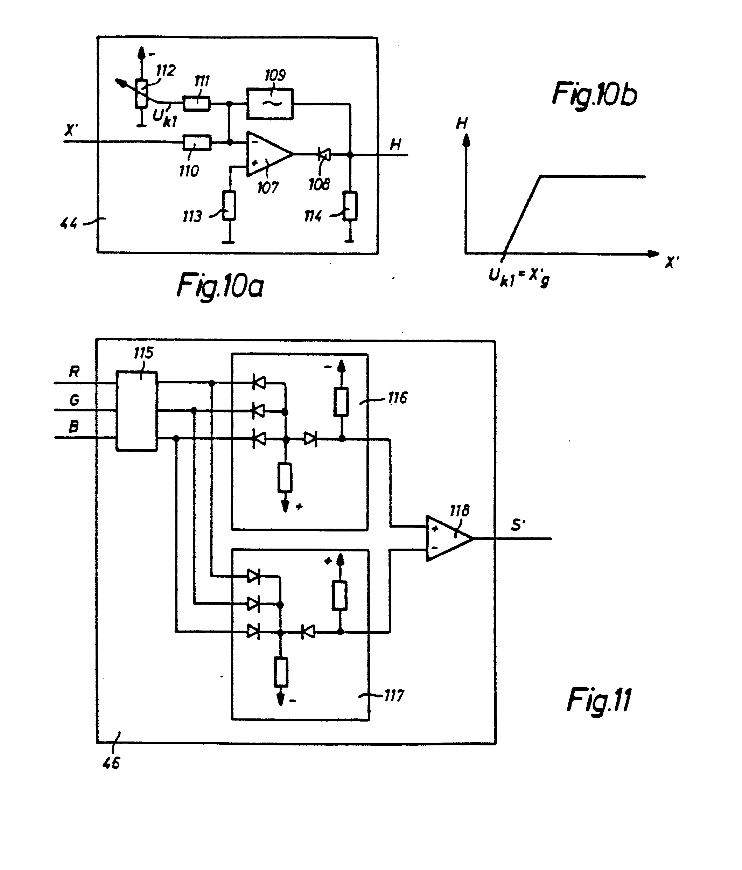

Das Hilfssteuersignal H, das in einem Signalgenerator 44 erzeugt wird, hat beispielsweise einen konstanten Wert $H_0$, der dann vorzugsweise $H_0 = \tan y_0/x_0$ gewählt wird. Vorteilhafter ist es aber, das Hilfssteuersignal H, wie im beschriebenen Ausführungsbeispiel, in erster Näherung von der Farbsättigung, d. h. vom Signal $+x'$, abhängig zu machen. In diesem Fall hat das Hilfssteuersignal $H = f(x')$ vom maximalen Farbsättigungswert bis in die Nähe des bereits in Fig. 2 erläuterten Grenz-Farbsättigungswertes $x'_g$ den konstanten Wert $H_0$, fällt dann ab und hat zwischen dem Grenz-Farbsättigungswert $x'_g$ und der Grauachse ($x' = 0$) den Wert Null. Fig. 10 zeigt ein Ausführungsbeispiel für den Signalgenerator 44.

In Fig. 4 sind verschiedene Verläufe des Farbton-Erkennungssignals E' in Abhängigkeit des Winkels $\beta$ für verschiedene Grenzwinkel $\beta_g$ des Farbton-Erkennungsbereiches und für ein konstantes Hilfssteuersignal $H_0$ bzw. für den zwischen dem Grenz-Farbsättigungswert und dem maximalen Farbsättigungswert liegenden Bereich des Hilfssteuersignals $H = f(x')$ dargestellt.

Das Farbton-Erkennungssignal E' hat für Farbtöne der abgetasteten Farben, die dem ausgewählten Auszugsfarbton $T_0$ entsprechen ($\beta = 0$), einen maximalen Wert $E_m = H_0$, der bei $H_0 = \tan y_0/x_0$ genau dem Auszugsfarbton $T_0$ entspricht. Mit steigender Abweichung der Farbtöne der abgetasteten Farben von dem Auszugsfarbton $T_0$ fällt das Farbton-

Erkennungssignal E' ab und erreicht bei dem jeweiligen Grenzwinkel $\beta_g$ des eingestellten Farbton-Erkennungsbereiches den Wert E' = 0.

Alternativ zur Einstellung des Grenzwinkels $\beta_g$ des Farbton-Erkennungsbereiches mit Hilfe des Potentiometers 34 kann der Grenzwinkel $\beta_g$ auch durch Amplitudenänderung des Farbton-Signals T' in der Signalformer-Stufe 38 oder des Wertes $H_0$ des Hilfssteuersignals H in dem Signalgenerator 44 eingestellt werden. '

Fig. 5 zeigt verschiedene Verläufe des Farbton-Erkennungssignals E' in Abhängigkeit des Signals x' bzw. der Farbsättigung für den Fall, daß das Hilfssteuersignal $H = f(x')$ und der Winkel $\beta$ Parameter sind. Durch die Abhängigkeit des Farbton-Erkennungssignals E' von der Farbsättigung wird in vorteilhafter Weise eine Abgrenzung nach "Grau" erreicht.

Eine Abhängigkeit des Farbton-Erkennungssignals E' von der Farbsättigung kann alternativ auch dadurch erreicht werden, daß das Farbton-Steuersignal T* in der Verknüpfungs-Stufe 21 mit dem Signal $+x'$ multiplikativ verknüpft wird.

Wenn die Erkennungs-Schaltung 5 auf eine Auszugsfarbe einzustellen ist, muß ein dreidimensionaler Farb-Erkennungsbereich im Farbton/Farbsättigungs/Luminanz-Farbraum abgegrenzt werden, indem der sektorförmige Farbton-Erkennungsbereich zusätzlich hinsichtlich der Helligkeit und/oder der Farbsättigung eingegrenzt wird.

Zur Eingrenzung bezüglich der Helligkeit wird in der Erkennungs-Schaltung 5 in einem Luminanz-Signalgenerator 45, dem die Farbmeßwert-Signale R, G und B über die Leitungen 4 zugeführt werden, aus mindestens einem, vorzugsweise aus allen drei Farbmeßwert-Signalen R, G und B gemäß der Beziehung $L' = f_1R + f_2G + f_3B$ ein Luminanz-Signal L' gewonnen. Als Luminanz-Signal L' kann auch das in der Umformer-Stufe 22 gebildete Luminanz-Signal z verwendet werden, falls an der Bildung des Luminanz-Signals L' alle drei Farhmeßwert-Signale R, G und B beteiligt sind. In diesem Fall kann der Luminanz-Signalgenerator 45 entfallen.

Zur Eingrenzung bezüglich der Farbsättigung erzeugt ein Farbsättigungs-Signalgenerator 46 ein Farbsättigungs-Signal S'. Das Farbsättigungs-Signal S' kann gemäß der Gleichung $S' = \sqrt{x^2 + y^2}$ aus den in der Umformer-Stufe 22 gebildeten Chrominanz-Signalen x und y gewonnen werden, welche dem Farbsättigungs-Signalgenerator 46 über die gestrichelt dargestellten Leitungen 47 zugeführt werden. In diesem Falle gibt das Farbsättigungs-Signal S' die exakten Farbsättigungswerte wieder. Der Farbsättigungs-Signalgenerator 46 enthält dann Rechenbausteine (Quadrierer, Addierer, Radizierer), die aber keine hohe Arbeitsgeschwindigkeit zulassen. Um diese Schwierigkeit zu beheben, wird in vorteilhafter Weise ein an die exakten Farbsättigungswerte angenähertes Farbsättigungs-Signal S' verwendet. In diesem Falle wird das angenäherte

**0 144 462**

Farbsättigungs-Signal S' aus den über die Leitungen 4 an den Farbsättigungs-Signalgenerator 46 gelangenden Farbmeßwert-Signalen R, G und B abgeleitet, indem im Farbsättigungs-Signalgenerator 46 laufend das maximale und das minimale Farbmeßwert-Signal fest gestellt und die Differenz der Extremwerte gebildet wird, welche näherungsweise dem Farbsättigungs-Signal S' entspricht, da das maximale Farbmeßwert-Signal einer abgetasteten Farbe die Farbsättigung und das minimale Farbmeßwert-Signal den Grauton dieser Farbe repräsentieren. Da der Farbsättigungs-Signalgenerator 46 nunmehr nicht die oben genannten Rechenbausteine enthält, kann durch die angegebene Signalbildung in vorteilhafter Weise die Arbeitsgeschwindigkeit der Schaltungsanordnung und damit auch die Abtastgeschwindigkeit bzw. die Aufzeichnungsgeschwindigkeit für den Farbauszug erhöht werden. Falls eine noch gröbere Näherung bei der Bildung des Farbsättigungs-Signals S' erlaubt ist, kann anstelle des Farbsättigungs-Signals S' auch das Signal +x' verwendet werden.

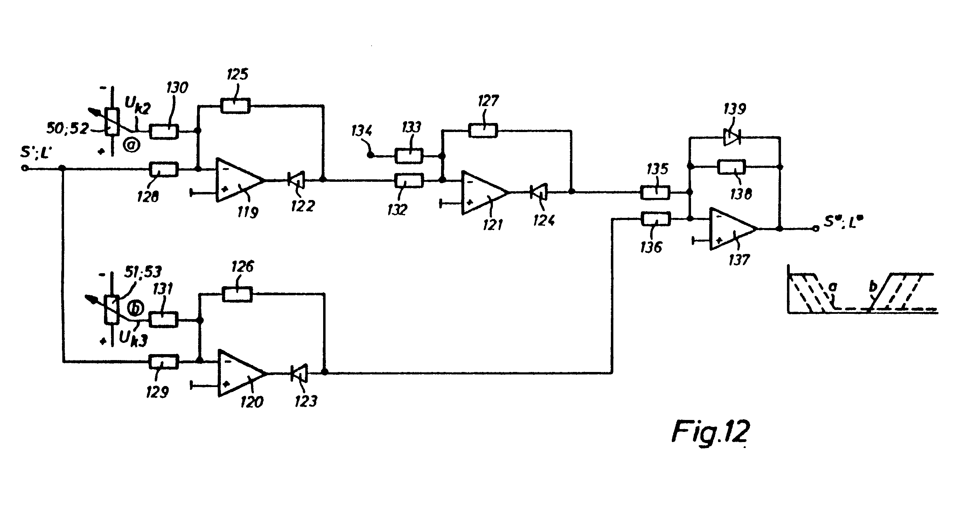

Dem Luminanz-Signalgenerator 45 ist eine Begrenzer-Stufe 48 nachgeschaltet, in der aus dem Luminanz-Signal L' das Luminanz-Steuersignal L* erzeugt wird. Ebenso ist dem Farbsättigungs-Signalgenerator 46 eine entsprechende Begrenzer-Stufe 49 nachgeschaltet, welche das Farbsättigungs-Signal S' in das Farbsättigungs-Steuersignal S* umwandelt. Die Bildung des Luminanz-Steuersignals L* und des Farbsättigungs-Steuersignals S* erfolgt durch Begrenzung des Luminanz-Signals L' bzw. des Farbsättigungs-Signals S' mit Hilfe von Kompensationsspannungen, welche an Potentiometern 50 und 51 bzw. 52 und 53 einstellbar sind. Gleichzeitig können das Luminanz-Signal L' und das Farbsättigungs-Signal S' in den Begrenzer-Stufen 48 bzw. 49 noch amplitudenmäßig und/oder nach Gradationskurven nichtlinear verändert werden. Ein Ausführungsbeispiel für die identisch aufgebauten Begrenzer-Stufen 48 und 49 zeigt Fig. 12.

Das Luminanz-Steuersignal L* auf der Leitung 19 und/oder das Farbsättigungs-Steuersignal S* auf der Leitung 18 werden über die Schalter 42 und 43 auf die Verknüpfungs-Stufe 21 gegeben, in der gemäß Gleichung (8) das Farb-Erkennungssignal E'' auf der Leitung 6 erzeugt wird.

$$E'' = H\text{-}T^*\text{-}L^*\text{-}S^* \quad (8)$$
bzw.
$$E'' = E'\text{-}L^*\text{-}S^*$$

Alternativ kann die Verknüpfung des Farbton-Erkennungssignals E' mit dem Luminanz-Steuersignal L* und/oder dem Farbsättigungs-Steuersignal S* auch multiplikativ erfolgen.

Mit Hilfe der Potentiometer 50 - 53 an den Begrenzer-Stufen 48 und 49 können bei der Abgrenzung der Farb-Erkennungsbereiche die Helligkeitswerte und Farbsättigungswerte festgelegt werden, bei denen die Helligkeit bzw. die Farbsättigung der abgetasteten Farben Einfluß auf den Verlauf des Farb-Erkennungssignals E'' nehmen. Mit Hilfe der Schalter 42 und 43 kann außerdem eine Auswahl der Signale getroffen werden, die an der Bildung des Farb-Erkennungssignals E'' beteiligt werden sollen.

Der Verlauf des Farb-Erkennungssignals E'' in bezug auf den Farbton der abgetasteten Farben entspricht dem in Fig. 4 dargestellten Verlauf des Farbton-Erkennungssignals E', wenn Helligkeit und Farbsättigung unberücksichtigt bleiben.

Fig. 6 zeigt verschiedene, durch die Potentiometer 50 bis 53 der Begrenzer-Stufen 48 und 49 einstellbare Verläufe des Luminanz-Steuersignals L* in Abhängigkeit der Helligkeit bzw. Verläufe des Farbsättigungs-Steuersignals S* in Abhängigkeit der Farbsättigung.

In Fig. 7 sind die zugehörigen Verläufe des Farb-Erkennungssignals E'' in Abhängigkeit der Helligkeit bzw. der Farbsättigung dargestellt. Zur Vereinfachung der Darstellung ist angenommen, daß der Farbton einer abgetasteten Farbe gerade dem ausgewählten Auszugsfarbton $T_0$ entspricht.

Sollen im wesentlichen dunkle Farben ausgezogen werden, wird mit Hilfe eines der Potentiometer an der Begrenzer-Stufe 48 z. B. der Verlauf 54 des Luminanz-Steuersignals L* eingestellt, wodurch sich der Verlauf 54' des Farb-Erkennungssignals E'' ergibt. In diesem Falle hat das Farb-Erkennungssignal E'' bei dunklen Farben einen hohen Signalpegel, und die Signalbegrenzung setzt erst bei helleren Auszugsfarben ein.

Sollen dagegen im wesentlichen hellere Auszugsfarben erkannt werden, wird mit Hilfe des anderen Potentiometers an der Begrenzer-Stufe 48 beispielsweise der Verlauf 55 eingestellt, und es ergibt sich der Verlauf 55' des Farb-Erkennungssignals E''. In diesem Falle hat das Farb-Erkennungssignal E'' bei hellen Auszugsfarben einen hohen Signalpegel, der zu dunklen Auszugsfarben hin begrenzt wird. Dadurch können in vorteilhafter Weise helle und dunkle Auszugsfarben exakt voneinander getrennt werden.

Zur Abgrenzung eines Helligkeits-Bereiches kann mit Hilfe beider Potentiometer an der Begrenzer-Stufe 48 auch der Verlauf 56 des Luminanz-Steuersignals L* und der Verlauf 56' des Farb-Erkennungssignals E'' erzeugt werden. So lassen sich im wesentlichen Farben ausziehen, die in oder in der Nähe der Chrominanzebene liegen.

Durch eine sinngemäße Einstellung der Potentiometer an der Begrenzer-Stufe 49 kann eine Abgrenzung der abgetasteten Farben hinsichtlich kleinerer oder größerer Farbsättigungswerte sowie hinsichtlich eines Farbsättigungs-Bereiches vorgenommen werden.

In einer vorteilhaften Ausgestaltung wird aus dem Farbsättigungs-Signal S' durch eine Signalbegrenzung in einer weiteren Begrenzer-Stufe 57 und durch Amplitudeneinstellung an einem Potentiometer 58 ein Schwarz-Steuersignal K* erzeugt, welches wahlweise mittels eines Schalters 59 an der Signalverknüpfung in der Verknüpfungs-Stufe 21 beteiligt werden kann.

Das Einzelfarbenauszugs-Signal A entsteht durch Mischung des ausgewählten Farbsignals F mit einem dem Bildweiß (hellstes Weiß) entsprechenden normierten Spannungswert W in der Misch-Stufe 12, wobei das Mischungsverhältnis gemäß Gleichung (9) vom Erkennungs-Signal E auf der Leitung 6 abhängig ist, das, wie zuvor erläutert, in der Erkennungs-Schaltung 5 gewonnen wird.

$$A = F \cdot E + (W-E) \quad (9)$$

Der normierte Spannungswert W, z. B. W = 1, ist der normierte Weißpegel, auf den alle drei Farbmeßwert-Signale R, G und B beim Ausmessen der hellsten, neutralen Bildstelle (Weißpunkt) auf der Farbvorlage 1 bei der Weißpegel-Eichung des Farbscanners abgeglichen wurden.

Nach den in Fig. 4 dargestellten Verläufen hat das Erkennungs-Signal E bei Abtastung des Auszugsfarbtons $T_0$ in der Farbvorlage 1 einen normierten maximalen Wert, z. B. $E_m = 1$, nimmt dann mit dem Abstand der Farbtöne der abgetasteten Farben von dem Auszugsfarbton $T_0$ ab und ist bei außerhalb des abgegrenzten Farbton-Erkennungsbereiches liegenden Farbtönen gleich Null (E = 0).

Folglich ist das Einzelfarbenauszugs-Signal A gemäß Gleichung (9) bei Abtastung des Auszugsfarbtons $T_0$ gleich dem ausgewählten Farbsignal F, bei innerhalb des abgegrenzten Farbton-Erkennungsbereiches liegenden Farbtönen ein additives Mischsignal aus dem ausgewählten Farbsignal F und dem normierten Spannungswert W, wobei das Mischungsverhältnis vom Abstand der Farbtöne der abgetasteten Farben zum Auszugsfarbton $T_0$ abhängig ist, und bei außerhalb des Farbton-Erkennungsbereiches liegenden Farbtönen gleich dem normierten Spannungswert W.

Zur Erzeugung des Einzelfarbenauszugs-Signals A wird das ausgewählte Farbsignal F in der Misch-Stufe 12 einem Modulator 60 zugeführt. Der Modulator 60, der außerdem mit dem Erkennungs-Signal E auf der Leitung 6 beaufschlagt ist, ist als Multiplizierer für Farbsignal F und Erkennungssignal E ausgebildet. Das Produkt F · E wird auf eine Addier-Stufe 61 gegeben, in der dem Produkt F · E ein vom Erkennungs-Signal E abhängiger Spannungswert W' hinzuaddiert wird. Zur Bildung des Spannungswertes W' = (W - E) wird der dem Bildweiß bzw. dem Weißpegel entsprechende normierte Spannungswert W an einem Potentiometer 62 eingestellt. Der normierte Spannungswert W und das in einem Inverter 63 invertierte Erkennungs-Signal E wird in einer weiteren Addier-Stufe 64 addiert, um den Spannungswert W' zu erhalten.

Durch die beschriebene Art der Bildung des Einzelfarbenauszugs-Signals A wird in vorteilhafter Weise eine Entsättigung der außerhalb der eingestellten Erkennungsbereiche liegenden Farben bzw. Farbtöne erreicht. Gleichzeitig wird der Farbverlauf oder der Farbübergang an Bereichsgrenzen des Farbauszuges derart verbessert, daß die Bereichsgrenzen nicht mehr scharf, sondern überlappend aufgezeichnet werden. Durch die Überlappung entsteht beim späteren Druck eine Mischdruck-Zone, in der die ermischten Farben nicht mehr nebeneinander, sondern übereinander gedruckt werden, wodurch störende Farbabrisse vermieden werden.

Durch die individuelle Einstellung des Verlaufs des Erkennungs-Signals E in Abhängigkeit von Farbsättigung und Helligkeit einerseits und durch die gesteuerte Farbentsättigung andererseits wird die Herstellung von Farbauszügen für den Einzelfarbendruck wesentlich verbessert. Beispielsweise lassen sich Farbauszüge für dunkle oder helle Farben herstellen, wobei die hellen bzw. dunklen Farben zu Weiß entsättigt oder korrigiert werden. Andererseits lassen sich Farbauszüge für Farben kleiner oder großer Farbsättigung herstellen, wobei die stark gesättigten bzw. die ungesättigten Farben zu Weiß korrigiert werden.

Fig. 8 zeigt ein Ausführungsbeispiel für das optoelektronische Abtastorgan 3. Das von der Farbvorlage 1 reflektierte oder durchgelassene Abtastlicht 65 gelangt durch Objektive 66 und 67 und durch eine Blende 68 in das Abtastorgan 3 und wird dort mittels zweier dichroitischer Farbteiler 69 und 70 in drei Teilbündel 65', 65'' und 65''' aufgespalten. Die Teilbündel 65', 65'' und 65''' fallen durch Korrektur-Farbfilter 71, 71' und 71'' auf optoelektronische Wandler 72, 72' und 72'', die das empfangene Teillicht entsprechend den Intensitäten der Grundfarben-Anteile an den abgetasteten Farben in die primären Farbmeßwert-Signale R, G und B umwandeln.

Fig. 9 zeigt ein Ausführungsbeispiel für die Transformations-Stufe 23.

In der Transformations-Stufe 23 werden die Chrominanz-Signale $x_0$ und $y_0$ des ausgewählten Auszugsfarbtons $T_0$ während eines Abgleichvorganges durch monotone Änderung des Winkels α so gedreht, daß die gedrehten Chrominanz-Signale $x'_0 > 0$ und y' = 0 sind, wobei der dabei gefundene Winkel $α_0$ festgehalten wird. Diese Koordinaten-Drehung läuft gemäß Gleichung (4) ab.

Während der punkt- und zeilenweisen Abtastung der Farbvorlage 1 werden dann die laufend erzeugten Chrominanz-Signale x und y gemäß Gleichung (5) gedreht.

Die Transformations-Stufe 23 besteht aus vier Multiplizier-Stufen 74, 75, 76 und 77, einer Addier-Stufe 78, einer Subtrahier-Stufe 79, einem Festwert-Speicher 80, einem Adreßzähler 81, einer Tor-Stufe 82, einem Taktgenerator 83 sowie aus einer Überwachungs-Stufe 84.

Die Multiplizier-Stufen 74, 75, 76 und 77 sind in vorteilhafter Weise aus multiplizierenden D/A-Wandlern, z. B. aus integrierten Bausteinen vom Typ AD 7542 der Firma Analog Devices, aufgebaut. In einen solchen multiplizierenden D/A-Wandler kann ein wählbarer Faktor in Form von Digitalwerten über einen Dateneingang eingegeben werden, die in einem internen Register speicherbar sind. Ein am Eingang des multiplizierenden D/A-Wandlers anstehendes analoges Signal wird mit dem eingestellten Faktor multipliziert, wobei das Produkt wiederum als analoges Signal am Ausgang des multiplizierenden D/A-Wandlers zur Verfügung steht.

Während des Abgleichvorganges wird das von der gestrichelt angedeuteten Umformer-Stufe 22 kommende Chrominanz-Signal $x_0$ auf die Eingänge 85 und 86 der Multiplizier-Stufen 74 und 75 gegeben, während das Chrominanz-Signal $y_0$ auf die Eingänge 87 und 88 der Multiplizier-Stufen 76 und 77 gelangt. Im Festwert-Speicher 80 sind für Winkelwerte $\alpha$ von 0 - 360° die entsprechenden Sinus- und Cosinus-Werte als Digitalwerte $b = e = \cos \alpha$ und $c = d = \sin \alpha$ durch die zugehörigen Winkelwerte als Adressen des Festwert-Speichers 80 abrufbar gespeichert. Der Datenausgang 89 des Festwert-Speichers 80 für die Digitalwerte $b = e = \cos \alpha$ ist über einen Daten-Bus 90 mit den Dateneingängen 91 und 92 der Multiplizier-Stufen 74 und 77 und der entsprechende Datenausgang 93 für die Digitalwerte $c = d = \sin \alpha$ über einen Daten-Bus 94 mit den Dateneingängen 95 und 96 der Multiplizier-Stufen 75 und 76 verbunden.

Der einschaltbare Taktgenerator 83 steht über die Tor-Stufe 82 mit dem Takteingang 97 des Adreßzählers 81 in Verbindung. Der Ausgang 98 des Adreßzählers 81 ist über einen Adreß-Bus 99 an den Adreßeingang 100 des Festwert-Speichers 80 angeschlossen. Die Ausgänge 101 und 102 der Multiplizier-Stufen 74 und 76 stehen mit der Addier-Stufe 78 und die Ausgänge 103 und 104 der Multiplizier-Stufen 75 und 77 mit der Subtrahier-Stufe 79 in Verbindung.

Der Ausgang der Addier-Stufe 78 und der Ausgang der Subtrahier-Stufe 79 sind an die Überwachungs-Stufe 84 für die Bedingungen $x'_0 > 0$ und $y'_0 = 0$ angeschlossen. Die Überwachungs-Stufe 84 steht mit einem Steuereingang 105 der Tor-Stufe 82 in Verbindung.

Der Abgleichvorgang wird durch Einschalten des Taktgenerators 83 mit Hilfe einer Taste 106 eingeleitet. Der Zähltakt wird in den Adreßzähler 81, der vorher rückgesetzt wurde, eingezählt, wobei der ansteigende Zählerstand momentan ansteigenden Winkelwerten $\alpha$ entspricht. Der Adreßzähler 81 ruft nacheinander die Adressen des Festwert-Speichers 80 auf, die zu den Winkelwerten gehörenden Digitalwerte $\cos \alpha$ und $\sin \alpha$ werden in die Multiplizier-Stufen 74, 75, 76 und 77 übertragen und dort mit den

entsprechenden Chrominanz-Signalen $x_0$ und $y_0$ multipliziert. Die Einzelprodukte werden gemäß Gleichung (4) addiert bzw. voneinander subtrahiert, so daß an dem Ausgang der Addier-Stufe 78 das gedrehte Chrominanz-Signal $x'_0$ und am Ausgang der Subtrahier-Stufe 79 das gedrehte Chrominanz-Signal $y'_0$ erscheint. Dabei werden die gedrehten Chrominanz-Signale $x'_0$ und $y'_0$ laufend von der Überwachungs-Stufe 84 überprüft. Die Überwachungs-Stufe 84 gibt ein Steuersignal an die Tor-Stufe 82 ab, wenn die Bedingungen erfüllt sind, wodurch der Zähltakt unterbrochen wird. Der dabei erreichte und fixierte Zählerstand im Adreßzähler 81 entspricht dem gesuchten Winkel $\alpha_0$.

Fig. 10a zeigt ein Ausführungsbeispiel für den Signalgenerator 44 zur Erzeugung des Hilfssteuersignals H in Abhängigkeit des Signals $x'$.

Der Signalgenerator 44 besteht aus einem invertierenden Verstärker 107, dessen Ausgang über eine Diode 108 und über ein Netzwerk 109 mit dem invertierenden Eingang des Verstärkers 107 verbunden ist. Der invertierende Eingang des Verstärkers 107 ist außerdem über einen ersten Summier-Widerstand 110 mit dem Signal $x'$ beaufschlagt und über einen zweiten Summier-Widerstand 111 an ein Potentiometer 112 angeschlossen. An dem Potentiometer 112 kann eine Kompensationsspannung $U_{k1}$ eingestellt werden, die dem gewünschten Grenz-Farbsättigungswert $x'_g$ entspricht. Der nichtinvertierende Eingang des Verstärkers 107 ist über einen Widerstand 113 und die Anode der Diode 108 über einen Widerstand 114 an Massepotential gelegt. Bei Werten des Signals $x'$, die betragsmäßig kleiner als die Kompensationsspannung $U_{k1}$ sind, ist das Hilfssteuersignal $H = 0$. Erreicht das Signal $x'$ betragsmäßig die Kompensationsspannung $U_{k1}$, steigt das Hilfssteuersignal H entsprechend der im Netzwerk 109 eingestellten Verstärkung an und erreicht dann einen ebenfalls durch das Netzwerk 109 vorgegebenen Grenzwert $H_0$.

Fig. 10b zeigt den Verlauf des Hilfssteuersignals H am Ausgang des Signalgenerators 44.

Fig. 11 zeigt ein Ausführungsbeispiel für den Farbsättigungs-Signalgenerator 46 zur Erzeugung des Farbsättigungs-Signals S' aus den Farbmeßwert-Signalen R, G und B.

Die vom nicht dargestellten optoelektronischen Abtastorgan 3 gelieferten Farbmeßwert-Signale R, G und B werden in einer Logarithmier-Stufe 115 logarithmiert oder teillogarithmiert und gleichzeitig einer Maximumauswahl-Stufe 116 und einer Minimumauswahl-Stufe 117 zugeführt, welche aus den Farbmeßwert-Signalen R, G und B die maximalen bzw. minimalen Farbmeßwerte feststellen. In einer der Maximumauswahl-Stufe 116 und der Minimumauswahl-Stufe 117 nachgeschalteten Subtrahier-Stufe 118 wird das Farbsättigungs-Signal S' als Differenzsignal aus den festgestellten maximalen und minimalen Farbmeßwerten gebildet, welches näherungsweise der Farbsättigung entspricht.

Fig. 12 zeigt ein Ausführungsbeispiel für die Begrenzer-Stufe 48 bzw. 49 und 54, die identisch aufgebaut sind.

Die Begrenzer-Stufe besteht aus drei invertierenden Verstärkern 119, 120 und 121. Die Ausgänge der Verstärker 119, 120 und 121 sind jeweils über Dioden 122, 123 und 124 und über Widerstände 125, 126 und 127 mit den invertierenden Eingängen der Verstärker verbunden. Die invertierenden Eingänge der Verstärker 119 und 120 sind gemeinsam über erste Summier-Widerstände 128 und 129 mit dem Eingangssignal beaufschlagt. Der invertierende Eingang des Verstärkers 119 ist über einen Summier-Widerstand 130 mit dem Potentiometer 50 bzw. 52 und der invertierende Eingang des Verstärkers 120 über einen weiteren Summier-Widerstand 131 mit dem Potentiometer 51 bzw. 53 verbunden. Der invertierende Eingang des Verstärkers 121 ist über einen Summier-Widerstand 132 an den Ausgang des Verstärkers 119 und über einen Summier-Widerstand 133 an eine positive Spannungsquelle 134 angeschlossen. Die Ausgänge der Verstärker 120 und 121 stehen über Summier-Widerstände 135 und 136 mit dem invertierenden Eingang eines Begrenzer-Verstärkers 137 in Verbindung, dessen Ausgang über eine Parallelschaltung eines Widerstandes 138 mit einer Begrenzer-Diode 139 auf den invertierenden Eingang gekoppelt ist. Am Ausgang des Begrenzer-Verstärkers 137 stehen die begrenzten Signale mit den in Fig. 6 dargestellten Verläufen zur Verfügung.

**Patentansprüche**

1. Verfahren zur Herstellung von Farbauszügen einer Farbvorlage für den Einzelfarbendruck, bei dem

a) die Farbvorlage zur Gewinnung von Farbmeßwert-Signalen mittels eines optoelektronischen Abtastorgans punkt- und zeilenweise trichromatisch abgetastet wird,

b) ein Erkennungsbereich abgegrenzt und ein Erkennungssignal abgegeben wird, wenn die Farbmeßwert-Signale in den Erkennungsbereich fallen,

c) aus den Farbmeßwert-Signalen korrigierte Farbsignale erzeugt werden,

d) mindestens ein korrigiertes Farbsignal und das Erkennungssignal zu einem Auszugs-Signal verknüpft werden,

e) der Farbauszug durch ein vom Auszugs-Signal gesteuertes Aufzeichnungsorgan auf einem Aufzeichnungsmedium punkt- und zeilenweise aufgezeichnet wird, und bei dem vor der Aufzeichnung des Farbauszuges

f) der Farbort ($F_0$) eines ausgewählten Auszugsfarbtons ($T_0$) einer Vorlagenfarbe durch Farbwerte ($R_0$, $G_0$, $B_0$) festgelegt wird, und

g) der Farbort ($F_0$) des Auszugsfarbtons ($T_0$) durch eine erste Transformation seiner Farbwerte ($R_0$, $G_0$, $B_0$) in entsprechende Chrominanzwerte ($x'_0$, $y'_0$) in die Chrominanzebene des Chrominanz/Luminanz-Farbraumes transformiert wird, dadurch gekennzeichnet, daß

h) die erste Transformation derart durchgeführt wird, daß der transformierte Farbort ($F'_0$) auf einem der Achsenabschnitte eines X'Y'-Farbkoordinatensystems (25) in der Chrominanzebene liegt, und die dazu erforderlichen Transformationskoeffizienten festgehalten werden, während der Aufzeichnung des Farbauszugs

i) die Farborte (F) der Farbtöne der abgetasteten Vorlagenfarben laufend durch eine zweite Transformation der Farbmeßwert-Signale (R, G, B) in Chrominanzwerte (x', y') mit den zuvor ermittelten Transformationskoeffizienten in die Chrominanzebene transformiert werden,

j) diejenigen Chrominanzwerte (x', y') ausgewählt werden, deren zugehörige transformierte Farborte (F') in derselben Hälfte des X'Y'-Farbkoordinatensystems (25) liegen wie der transformierte Farbort ($F'_0$) des Auszugsfarbtons ($T_0$),

k) ein Farbton-Signal (T') durch Bildung des Quotienten aus den Beträgen der ausgewählten Chrominanzwerte (x', y') gewonnen wird, welcher jeweils dem Tangens des Winkels ($\beta$) entspricht, der von dem betreffenden Achsenabschnitt und einer Verbindungslinie zwischen Koordinatenursprung und transformiertem Farbort (F') des Farbtons einer abgetasteten Vorlagenfarbe eingeschlossen wird, wodurch das Farbton-Signal (T') ein Maß für die jeweilige betragsmäßige Farbton-Abweichung des Farbtons einer abgetasteten Vorlagenfarbe von dem Auszugsfarbton $T_0$ ist,

l) aus einem im wesentlichen konstanten Hilfssteuersignal (H) und dem Farbton-Signal (T') ein Farbton-Erkennungssignal (E') gewonnen wird, welches seinen größten Wert beim Abtasten des Auszugsfarbtons und den Wert Null beim Abtasten eines Farbtons mit einer vorgegebenen maximalen Farbton-Abweichung vom Auszugsfarbton ($T_0$) hat, wodurch ein sektorförmiger Farbton-Erkennungsbereich (26) um den betreffenden Achsenabschnitt bzw. um den Auszugsfarbton ($T_0$) abgegrenzt wird, und

m) das Farbton-Erkennungssignal (E') zur Aufzeichnung des Farbauszuges des ausgewählten Auszugsfarbtons ($T_0$) zur Verknüpfung mit dem korrigierten Farbsignal (F) verwendet wird.

2. Verfahren nach Anspruch 1, dadurch gekennzeichnet, daß die Verknüpfung von korrigiertem Farbsignal (F) und Farbton-Erkennungssignal (E') zum Auszugssignal (A) durch Mischung des korrigierten Farbsignals (F) mit einem normierten Spannungswert (W) in einem vom Abstand eines in der Farbvorlage abgetasteten Farbtons von dem ausgewählten Auszugsfarbton ($T_0$) abhängigen Mischungsverhältnis erfolgt, wobei das Auszugssignal (A) bei Abtastung des Auszugsfarbtones ($T_0$) gleich dem korrigierten

Farbsignal (F) und bei Abtastung eines außerhalb des Farbton-Erkennungsbereiches (26) liegenden Farbtons gleich dem normierten Spannungswert (W) ist.

3. Verfahren nach Anspruch 2, dadurch gekennzeichnet, daß der normierte Spannungswert (W) dem Weißpegel entspricht, auf den die beim Ausmessen der hellsten neutralen Bildstelle der Farbvorlage gewonnenen Farbmeßwert-Signale (R, G, B) abgeglichen werden.

4. Verfahren nach einem der Ansprüche 1 - 3, dadurch gekennzeichnet, daß dasjenige korrigierte Farbsignal (F) zur Verknüpfung mit dem Farbton-Erkennungssignal (E') ausgewählt wird, welches den Farbverlauf des Auszugsfarbtons ($T_0$) am besten wiedergibt.

5. Verfahren nach einem der Ansprüche 1 - 4, dadurch gekennzeichnet, daß die korrigierten Farbsignale (F) den durch eine Farbkorrektur gewonnenen Farbauszugswerten (Y, M, C) für den Mehrfarbenmischdruck entsprechen.

6. Verfahren nach einem der Ansprüche 1 - 5, dadurch gekennzeichnet, daß die Farbwerte ($R_0$, $G_0$, $B_0$) des Auszugsfarbtons ($T_0$) durch optoelektronisches Ausmessen eines entsprechenden Farbtons in der Farbvorlage festgelegt werden.

7. Verfahren nach einem der Ansprüche 1 - 6, dadurch gekennzeichnet, daß die vorgegebene maximale Farbton-Abweichung von dem Auszugsfarbton ($T_0$) bzw. der Öffnungswinkel des Farbton-Erkennungsbereiches (26) durch Amplitudenänderung der Chrominanzwerte (y') senkrecht zum betreffenden Achsenabschnitt, des Farbton-Signals (T') oder des Hilfssteuersignals (H) eingestellt wird.

8. Verfahren nach einem der Ansprüche 1 - 7, dadurch gekennzeichnet, daß das Farbton-Erkennungssignal (E') durch Differenzbildung zwischen dem Hilfssteuersignal (H) und dem Farbton-Signal (T') gewonnen wird.

9. Verfahren nach einem der Ansprüche 1 - 8, dadurch gekennzeichnet, daß die erste Transformation der Farbwerte ($R_0$, $G_0$, $B_0$) des Auszugsfarbtons ($T_0$) in die Chrominanzwerte ($x'_0$, $y'_0$)

a) durch eine Matrizierung der Farbmeßwerte ($R_0$, $G_0$, $B_0$) in die Chrominanzwerte ($x_0$, $y_0$) eines XY-Farbkoordinatensystems (24) in der Chrominanzebene entsprechend einer Transformation des RGB-Farbraumes in den Chrominanz/Luminanz-Farbraum nach den Gleichungen:

$$x_0 = a_{11} R_0 + a_{12} G_0 + a_{13} B_0$$
$$y_0 = a_{21} R_0 + a_{22} G_0 + a_{23} B_0$$

b) und durch eine von der Lage des Farbortes ($F_0$) des Auszugsfarbtons ($T_0$) innerhalb der Chrominanzebene abhängige Koordinatendrehung der Chrominanzwerte ($x_0$, $y_0$) des XY-Farbkoordinantensystems (24) in die Chrominanzwerte ($x'_0$, $y'_0$) des gegenüber dem XY-Farbkoordinatensystem (24) um einen Winkel

($\alpha_0$) gedrehten X'Y'-Farbkoordinatensystems (25) entsprechend einer Drehung des Chrominanz/Luminanz-Farbraumes um die Luminanz-Achse (Z) nach den Gleichungen:

$$x'_0 = x_0 \cos \alpha_0 + y_0 \sin \alpha_0$$
$$y'_0 = -x_0 \sin \alpha_0 + y_0 \cos \alpha_0$$

erfolgt, wobei der Winkel ($\alpha_0$) als Transformationskoeffizient so bestimmt wird, daß der transformierte Farbort ($F'_0$) des Auszugsfarbtones ($T_0$) auf einem der Achsenabschnitte des X'Y'-Farbkoordinatensystems (25) liegt.

10. Verfahren nach einem der Ansprüche 1 - 9, dadurch gekennzeichnet, daß die zweite Transformation der Farbmeßwerte (R, G, B) der Farbtöne der abgetasteten Vorlagenfarben in die Chrominanzwerte (x', y') der transformierten Farborte (F')

a) durch eine Matrizierung der Farbmeßwerte (R, G, B) in die Chrominanzwerte (x, y) des XY-Farbkoordinatensystems (24) in der Chrominanzebene entsprechend einer Transformation des RGB-Farbraumes in den Chrominanz/Luminanz-Farbraum nach den Gleichungen:

$$x = a_{11} R + a_{12} G + a_{13} B$$
$$y = a_{21} R + a_{22} G + a_{23} B$$

b) und durch eine Koordinatendrehung der Chrominanzwerte (x, y) des XY-Farbkoordinatensystems (24) in die Chrominanzwerte (x', y') des X'Y'-Farbkoordinatensystems (25) um den festgestellten Winkel ($\alpha_0$) nach den Gleichungen:

$$x' = x \cos \alpha_0 + y \sin \alpha_0$$
$$y' = -x \sin \alpha_0 + y \cos \alpha_0$$

erfolgt.

11. Verfahren nach Anspruch 9, dadurch gekennzeichnet, daß der Winkel ($\alpha$) durch einen automatischen Abgleichvorgang verändert wird, bis einer der Chrominanzwerte ($x'_0$ bzw. $y'_0$) im X'Y'-Farbkoordinatensystem (25) zu Null wird, wobei der dabei gefundene Winkel ($\alpha_0$) als Transformationskoeffizient festgehalten wird.

12. Verfahren nach einem der Ansprüche 1 - 11, dadurch gekennzeichnet, daß das Farbton-Signal (T') vor der Verknüpfung mit dem Hilfssteuersignal (H) verformt wird.

13. Verfahren nach einem der Ansprüche 1 - 12, dadurch gekennzeichnet, daß

a) aus den Farbmeßwerten (R, G, B) ein Farbsättigungs-Signal (S') und aus mindestens einem der Farbmeßwerte (R, G, B) ein Luminanz-Signal (L') erzeugt wird,

b) Farbsättigungs-Signal (S') und Luminanz-Signal (L') in Abhängigkeit vorgegebener Farbsättigungswerte und Helligkeitswerte amplitudenmäßig begrenzt werden, um ein Farbsättigungs-Steuersignal (S*) und ein Luminanz-Steuersignal (L*) zu erhalten, und

c) mindestens eines der Steuersignale (S* bzw. L*) mit dem Farbton-Steuersignal (T*) und dem Hilfssteuersignal (H) verknüpft werden, um das Farbton-Erkennungssignal (E') zusätzlich in Abhängigkeit der Farbsättigung und/oder der Helligkeit zu steuern.

14. Verfahren nach einem der Ansprüche 1 - 13, dadurch gekennzeichnet, daß zur Eingrenzung von Auszugsfarben

a) das Hilfssteuersignal (H) mit dem Farbton-Steuersignal (T*); dem Farbsättigungs-Steuersignal (S*) und dem Luminanz-Steuersignal (L*) zu einem Farb-Erkennungssignal (E'') verknüpft wird, und

b) die Amplitudenbegrenzung der Steuersignale (S* bzw. L*) so eingestellt werden, daß das Farb-Erkennungssignal (E'') nur innerhalb eines räumlichen Farb-Erkennungsbereiches für die Auszugsfarbe von Null verschieden ist.

15. Verfahren nach Anspruch 14, dadurch gekennzeichnet, daß die Summe aus Farbton-Steuersignal (T*), Farbsättigungs-Steuersignal (S*) und Luminanz-Steuersignal (L*) gebildet wird und das Summensignal vom Hilfssteuersignal (H) subtrahiert wird, um das Farb-Erkennungssignal (E'') zu erhalten.

16. Verfahren nach einem der Ansprüche 1 - 15, dadurch gekennzeichnet, daß zur Erzeugung des Farbsättigungs-Signals (S')

a) aus den Farbmeßwerten (R, G, B) jeweils die maximalen und minimalen Farbmeßwerte ausgewählt werden, und

b) das Farbsättigungs-Signal (S') aus den Differenzen von maximalen und minimalen Farbmeßwerten gebildet wird.

17. Verfahren nach einem der Ansprüche 1 - 16, dadurch gekennzeichnet, daß das Hilfssteuersignal (H) von den Farbsättigungswerten der abgetasteten Farbe in der Farbvorlage abhängig ist.

18. Verfahren nach Anspruch 17, dadurch gekennzeichnet, daß das Hilfssteuersignal (H) von dem Farbsättigungswert Null bis zu einem Grenz-Farbsättigungswert ($x_g$), welcher die Ausdehnung eines Graubereiches um die Luminanz-Achse (Z) des Chrominanz/Luminanz-Farbraumes definiert, Null ist und von dem Grenz-Farbsättigungswert ($x_g$) bis zu maximalen Farbsättigungswerten einen konstanten Wert ($H_0$) hat.

19. Einrichtung zur Herstellung von Farbauszügen von einer Farbvorlage für den Einzelfarbendruck bestehend aus

a) einem optoelektronischen Abtastorgan (3) für die Farbvorlage zur Gewinnung von Farbmeßwert-Signalen,

b) einer an das Abtastorgan (3) angeschlossenen Erkennungs-Schaltung (5) zur Abgrenzung eines Erkennungsbereiches und zur Erzeugung eines Erkennungssignals mit

c) einer Transformations-Schaltung (22, 23), welche mit dem optoelektronischen Abtastorgan (3) verbunden ist und die Farbmeßwerte ($R_0$, $G_0$, $B_0$ bzw. R, G, B) in Chrominanzwerte ($x'_0$, $y'_0$ bzw. x', y') eines X'Y'-Farbkoordinatensystems (25) in der Chrominanzebene des Chrominanz/Luminanz-Farbraumes umwandelt sowie mit

d) einer Auswahl- und Betrags-Schaltung (31, 33), welche an die Transformations-Schaltung (22, 23) angeschlossen ist, zur Auswahl und Betragsbildung von Chrominanzwerten (x',y'),

e) einer mit dem Abtastorgan (3) verbundenen Korrektur-Schaltung (8, 9) zur Gewinnung von korrigierten Farbsignalen aus den Farbmeßwert-Signalen,

f) einer an die Korrektur-Schaltung (8, 9) und die Erkennungs-Schaltung (5) angeschlossenen Verknüpfungs-Schaltung (12) zur Bildung eines Aufzeichnungssignals, und aus

g) einem mit der Verknüpfungs-Schaltung (12) verbundenen Aufzeichnungsorgan (14) zur punkt- und zeilenweisen Aufzeichnung der Farbauszüge, dadurch gekennzeichnet, daß die Erkennungs-Schaltung (5) folgende zusätzliche Komponenten aufweist

h) Einstellmittel (34) zur Abgrenzung eines Farbton-Erkennungsbereiches, welche an die Auswahl- und Betrags-Schaltung (31, 33) angeschlossen sind,

i) eine Dividier-Stufe (37), die mit den Einstellmitteln (34) in Verbindung steht, zur Bildung eines Farbton-Signals (T') aus den Beträgen der ausgewählten Chrominanzwerte,

j) einen Signalgenerator (44) zur Erzeugung eines Hilfssteuersignals (H) und

k) eine Verknüpfungs-Stufe (21), die mit der Dividier-Stufe (37) und dem Signalgenerator (44) verbunden ist, zur Gewinnung eines Farbton-Erkennungssignals (E') aus dem Hilfssteuersignal (H) und dem Farbton-Signal (T'),

l) und daß die Verknüpfungs-Schaltung (12) als Misch-Stufe ausgebildet ist.

20. Einrichtung nach Anspruch 19, dadurch gekennzeichnet, daß die Verknüpfungs-Stufe (21) als Differenz-Stufe ausgebildet ist.

21. Einrichtung nach Anspruch 19 oder 20, dadurch gekennzeichnet, daß zwischen der Dividier-Stufe (37) und der Verknüpfungs-Stufe (21) eine Signalformer-Stufe (38) für das Farbton-Signal (T') angeordnet ist.

22. Einrichtung nach einem der Ansprüche 19 - 21, dadurch gekennzeichnet, daß die Erkennungs-Schaltung (5) zur Abgrenzung von Auszugsfarben zusätzlich folgende Komponenten aufweist:

a) einen Farbsättigungs-Signalgenerator (46) und einen Luminanz-Signalgenerator (45), welche an das optoelektronische Abtastorgan (3) angeschlossen sind, zur Gewinnung eines Farbsättigungs-Signals (S') und eines Luminanz-Signals (L') aus den Farbmeßwert-Signalen (R, G, B),

b) einstellbare Begrenzer-Stufen (48, 49), die den Signalgeneratoren (45, 46) nachgeschaltet sind, zur Erzeugung eines Farbsättigungs-Steuersignals (S*) und eines Luminanz-Steuersignals (L*) durch Amplitudenbegrenzung und

c) Schaltmittel (42, 43), die mit den Begrenzer-Stufen (48, 49) und der Verknüpfungs-Stufe (21) verbunden sind, zur wahlweisen Verknüpfung des Farbsättigungs-Steuersignals (S*) und/oder des Luminanz-Steuersignals (L*) mit dem Farbton-Signal (T') und dem Hilfssteuersignal (H), um das Farb-Erkennungssignal (E'') zu erzeugen.

23. Einrichtung nach einem der Ansprüche 19 - 22, dadurch gekennzeichnet, daß die Misch-Stufe (12) folgende Komponenten aufweist:

a) einen Multiplizierer (60) zur Produktbildung aus korrigiertem Farbsignal (F) und Erkennungssignal (E'; E''),

b) eine Spannungsquelle (59) zur Einstellung des normierten Spannungswertes (W),

c) einen Subtrahierer (63, 64) zur Differenzbildung aus normiertem Spannungswert (W) und Erkennungssignal (E'; E''), und

d) einen Addierer (61) zur Bildung des Aufzeichnungssignals (A), welcher an den Multiplizierer (60) und den Subtrahierer (63, 64) angeschlossen ist.

**Claims**

1. Process for the production of colour reparations for single colour printing from a colour original in which

a) the colour original is scanned trichromatically dot by dot and line by line by means of an opto-electronic scanning unit to obtain colour measurement signals,

b) a recognition range is delimited and a recognition signal is emitted when the colour measurement signals lie within the recognition range,

c) corrected colour signals are produced from the colour measurement signals,

d) at least one corrected colour signal and the recognition signal are linked into a separation signal,

e) the colour separation is recorded dot by dot and line by line on a recording medium by means of a recording unit controlled by the separation signal, and wherein prior to recording the colour separation

f) the colour location $(F_0)$ of a selected separation hue $(T_0)$ of an original colour is determined by means of colour values $(R_0, G_0, B_0)$, and

g) the colour location $(F_0)$ of the separation hue $(T_0)$ is transformed by a first conversion of its colour values $(R_0, G_0, B_0)$ into corresponding chrominance values $(x'_0, y'_0)$ in the chrominance plane of the chrominance/luminance colour space, characterized in that

h) the first conversion is so performed that the converted colour location $(F'_0)$ lies on one of the axis sections of an X'Y' colour co-ordinate system (25) in the chrominance plane, and the conversion factors required for this purpose are retained, during the recording of the colour separation

i) the colour locations (F) of the hues of the original colours scanned are currently transformed by a second conversion of the colour measurement signals (R, G, B) into chrominance values (x',y') in the chrominance plane by means of the previously determined conversion factors,

j) those chrominance values (x', y') are selected the corresponding converted colour locations (F') of which lie in the same half of the X'Y' colour co-ordinate system (25) as the converted colour location $(F'_0)$ of the separation hue $(T_0)$,

k) a hue signal (T') is obtained by forming the quotient of the amounts of the selected chrominance values (x', y'), which in each case corresponds to the tangent of the angle (β) which is subtended by the axis section in question and a connecting line between the co-ordinate origin and the converted colour location (F') of the hue of a scanned original colour, whereby the hue signal (T') is a measure of the quantitative hue deviation of the hue of a scanned original colour from the separation hue $(T_0)$,

l) a hue recognition signal (E') which has its maximum value when scanning the separation hue and the value zero when scanning a hue having a predetermined maximum hue deviation from the separation hue $(T_0)$ is obtained from a substantially constant auxiliary control signal (H) and the hue signal (T'), whereby a sector-shaped hue recognition range (26) is delimited around the axis section in question or about the separation hue $(T_0)$, and

m) the hue recognition signal (E') is utilized during recording the colour separation of the selected separation hue $(T_0)$ for combination with the corrected colour signal (F).

2. Process according to claim 1, characterized in that the combination of the corrected colour signal (F) and the hue recognition signal (E') to obtain the separation signal (A) is performed by mixing the corrected colour signal (F) with a standardized voltage value (W) in a mixing ratio dependent on the deviation of a hue scanned in a colour original from the selected separation hue $(T_0)$, the separation signal (A) equalling the corrected colour signal (F) when scanning the separation hue $(T_0)$ and equalling the standardized voltage value (W) when scanning a hue lying outside the hue recognition range (26).

3. Process according to claim 2, characterized in that the standardized voltage value (W) corresponds to the white level to which are matched the colour measurement signals (R, G, B) obtained by measuring the brightest neutral image dot of the colour original.

4. Process according to one of the claims 1 - 3, characterized in that the corrected colour signal (F) which most accurately reproduces the colour graduation of the separation hue $(T_0)$ is selected for combination with the hue recognition signal (E').

5. Process according to one of the claims 1 - 4, characterized in that the corrected colour signals (F) correspond to the colour separation values (Y,M,C) for multicolour mixed printing obtained by colour correction.

6. Process according to one of the claims 1 - 5, characterized in that the colour values $(R_0, G_0, B_0)$

of the separation hue $(T_0)$ are determined by opto-electronic measurement of a corresponding hue in the colour original.

7. Process according to one of the claims 1 - 6, characterized in that the preset maximum hue deviation from the separation hue $(T_0)$ or the angle of aperture of the hue recognition range (26) is set by amplitude variation of the chrominance values $(y')$ at right angles to the axis section in question, of the hue signal $(T')$ or of the auxiliary control signal $(H)$.

8. Process according to one of the claims 1 - 7, characterized in that the hue recognition signal $(E')$ is obtained by establishing the difference between the auxiliary control signal $(H)$ and the hue signal $(T')$.

9. Process according to one of the claims 1 - 8, characterized in that the first conversion of the colour values $(R_0, G_0, B_0)$ of the separation hue $(T_0)$ into the chrominance values $(x'_0, y'_0)$ is performed by

a) a matrix transformation of the colour values $(R_0, G_0, B_0)$ into the chrominance values $(x_0, y_0)$ of an XY-colour co-ordinate system (24) in the chrominance plane according to a transformation of the RGB colour space into the chrominance/luminance colour space according to the equations:

$$x_0 = a_{11}R_0 + a_{12}G_0 + a_{13}B_0$$
$$y_0 = a_{21}R_0 + a_{22}G_0 + a_{23}B_0$$

b) and by a rotation of the co-ordinates of the chrominance values $(x_0, y_0)$ of the XY colour co-ordinate system depending on the position of the colour location $(F_0)$ of the separation hue $(T_0)$ within the chrominance plane, into the chrominance values $(x'_0, y'_0)$ of the X'Y' colour co-ordinate system (25) rotated through an angle $(\alpha_0)$ with respect to the XY colour co-ordinate system, corresponding to a rotation of the chrominance/ luminance colour space around the luminance axis $(Z)$ according to the equations:

$$x'_0 = x_0 \cos \alpha_0 + y_0 \sin \alpha_0$$
$$y'_0 = - x_0 \sin \alpha_0 + y_0 \cos \alpha_0$$

the angle $(\alpha_0)$ being so determined as a conversion factor that the converted colour location $(F'_0)$ of the separation hue $(T_0)$ lies on one of the axis sections of the X'Y' colour co-ordinate system (25).

10. Process according to one of the claims 1 - 9, characterized in that the second transformation of the colour measurement values $(R, G, B)$ of the hues of the original colours scanned into the chrominance values $(x', y')$ of the converted colour locations $(F')$ is carried out by

a) a matrix transformation of the colour measurement values $(R, G, B)$ into the chrominance values $(x, y)$ of the XY colour co-ordinate system (24) in the chrominance plane corresponding to a conversion of the RGB colour space into the chrominance/luminance colour space according to the equations:

$$x = a_{11}R + a_{12}G + a_{13}B$$
$$y = a_{21}R + a_{22}G + a_{23}B$$

b) and by a rotation of the co-ordinates of the chrominance values $(x, y)$ of the XY colour co-ordinate system (24) into the chrominance values $(x', y')$ of the X'Y' colour co-ordinate system (25) through the determined angle $(\alpha_0)$ according to the equations:

$$x' = x \cos \alpha_0 + y \sin \alpha_0$$
$$y' = - x \sin \alpha_0 + y \cos \alpha_0$$

11. Process according to claim 9 characterized in that the angle $(\alpha)$ is varied by means of an automatic balancing operation, until one of the chrominance values $(x'_0$ and $y'_0$ respectively) in the X'Y' colour co-ordinate system (25) becomes zero, the angle $(\alpha_0)$ concomitantly determined being retained as a conversion factor.

12. Process according to one of the claims 1 - 11, characterized in that the hue signal $(T')$ is reformed prior to combination with the auxiliary control signal $(H)$.

13. Process according to one of the claims 1 - 12, characterized in that

a) a colour saturation signal $(S')$ is produced from the colour measurement values $(R, G, B)$ and a luminance signal $(L')$ is produced from at least one of the colour measurement values $(R, G, B)$,

b) the colour saturation signal $(S')$ and the luminance signal $(L')$ are limited in amplitude as a function of preset colour saturation values and brightness values to obtain a colour saturation control signal $(S^*)$ and a luminance control signal $(L^*)$, and

c) at least one of the control signals $(S^*$ or $L^*)$ is interlinked with the hue control signal $(T^*)$ and the auxiliary control signal $(H)$, so that the hue recognition signal $(E')$ may be controlled complementarily as a function of the colour saturation and/or brightness.

14. Process according to one of the claims 1 - 13, characterized in that to delimit separation colours

a) the auxiliary control signal $(H)$ is combined with the hue control signal $(T^*)$, the colour saturation control signal $(S^*)$ and the luminance control signal $(L^*)$ into a colour recognition signal $(E'')$, and

b) the amplitude limitations of the control signals $(S^*$ and $L^*$ respectively) are so adjusted that the colour recognition signal $(E'')$ differs from zero only within a spatial colour recognition range for the separation colour.

15. Process according to claim 14, characterized in that the hue control signal $(T^*)$, the colour saturation control signal $(S^*)$ and the luminance control signal $(L^*)$ are summated, and the summated signal is subtracted from the auxiliary control signal $(H)$ to obtain the colour recognition signal $(E'')$.

16. Process according to one of the claims 1 - 15, characterized in that for the purpose of generating the colour saturation signal (S'),

a) the maximum and minimum colour measurement values are selected in each case from the colour measurement signals (R, G, B),

b) and the colour saturation signal (S') is formed from the differences between the maximum and minimum colour values.

17. Process according to one of the claims 1 - 16, characterized in that the auxiliary control signal (H) depends on the colour saturation values of the colour scanned in the colour original.

18. Process according to one of the claims 1 - 16, characterized in that the auxiliary control signal (H) is nil from the colour saturation value zero up to a limiting colour saturation value $(x_g)$, which defines the extent of a grey area around the luminance axis (Z) of the chrominance/luminance colour space and has a constant value $(H_0)$ from the limiting colour saturation value $(x_g)$ to the maximum colour saturation value.

19. Apparatus for the production of colour separations from a colour original for single colour printing comprising

a) an opto-electronic scanning unit (3) for the colour original, for obtaining colour measurement signals,

b) a recognition circuit (5) connected to the scanning element (3) for delimiting a recognition range and generating a recognition signal, with

c) a transformation circuit (22, 23) which is connected to the opto-electronic scanning unit (3) and converts the colour measurement signals $(R_0, G_0, B_0$ or R, G, B respectively), into chrominance values $(x'_0, y'_0$ or x', y' respectively) of an X'Y' colour co-ordinate system (25) in the chrominance plane of the chrominance/luminance colour space, as well as with

d) a selection and quantifying circuit (31, 33) which is connected to the transformation circuit (22, 23) for selecting and quantifying chrominance values (x', y'),

e) a correction circuit (8, 9) connected to the scanning element (3) to obtain corrected colour signals from the colour measurement signals,

f) a combination circuit (12) connected to the correction circuit (8, 9) and the recognition circuit (5) for forming a recording signal, and

g) a recording unit (14) connected to the combination circuit (12) for dot by dot and line by line recording of the colour separations characterized in that the recognition circuit (5) comprises the following additional components:

h) setting means (34) for delimiting a hue recognition range, which is connected to the selection and quantifying circuit (31, 33),

i) a divider stage (37) which is in communication with the setting means (34), for producing a hue signal (T') from the quantities of the chrominance values selected,

j) a signal generator (44) for generating an auxiliary control signal (H),

k) an interlinking stage (21) which is connected to the divider stage (37) and the signal generator (44) for the purpose of obtaining a hue recognition signal (E') from the auxiliary control signal (H) and the hue signal (T'),

l) and that the combination circuit (12) is constructed as a mixer stage.

20. Apparatus according to claim 19, characterized in that the interlinking stage (21) is constructed as a differentiation stage.

21. Apparatus according to claim 19 or 20, characterized in that a signal shaping stage (38) for the hue signal (T') is situated between the divider stage (37) and the interlinking stage (21).

22. Apparatus according to one of the claims 19 - 21, characterized in that the recognition stage (5) has in addition the following components for delimitation of separation colours:

a) a colour saturation signal generator (46) and a luminance signal generator (45) which are connected to the opto-electronic scanning unit (3) for obtaining a colour saturation signal (S') and a luminance signal (L') from the colour measurement signals (R, G, B),

b) adjustable limiter stages (48, 49) which are postconnected to the signal generators (45, 46) for generating a colour saturation control signal (S*) and a luminance control signal (L*) by means of amplitude limitation, and

c) switching means (42, 43) which are coupled to the limiter stages (48, 49) and the interlinking stage (21), for optional interlinking of the colour saturation control signal (S*) and/or the luminance control signal (L*) with the hue signal (T') and the auxiliary control signal (H), for the purpose of generating the colour recognition signal (E'').

23. Apparatus according to one of the claims 19 - 22, characterized in that the mixer stage (12) comprises the following components:

a) a multiplier (60) to give the product of the corrected colour signal (F) and the recognition signal (E'; E''),

b) a voltage source (59) for establishing the standardized voltage value (W),

c) a subtractor (63, 64) to establish the difference of the standardized voltage value (W) and the recognition signal (E'; E''), and

d) a summator (61) to produce the recording signal (A), which is connected to the multiplier (60) and the subtractor (63, 64).

## Revendications

1. Procédé pour réaliser des extraits de couleur d'un modèle en couleur pour l'impression avec des couleurs singulières, selon lequel:

a) le modèle en couleur est détecté de manière trichrome point par point et ligne par ligne à l'aide q'un organe de détection opto-électronique pour obtenir les signaux de valeurs de mesure de couleur,

b) on délimite une plage de reconnaissance lorsque les signaux des valeurs de mesure de couleur tombent dans la plage de reconnaissance,

c) à partir des signaux de valeurs de mesure de couleur on forme des signaux de couleur corrigés,

d) on combine au moins un signal de couleur, corrigé et le signal de reconnaissance pour donner un signal d'extrait,

e) on inscrit l'extrait de couleur à l'aide d'un organe d'inscription commandé par le signal d'extrait, sur un support d'inscription en procédant point par point et ligne par ligne et avant l'inscription de l'extrait de couleur,

f) on détermine le lieu de couleur $(F_0)$ d'une teinte de couleur d'extrait $(T_0)$ choisie d'une couleur modèle par des valeurs de couleur $(R_0, G_0, B_0)$ et

g) on transforme le lieu de couleur $(F_0)$ de la teinte de couleur d'extrait $(T_0)$ par une première transformation de ces valeurs de couleur $(R_0, G_0, B_0)$ en des valeurs de chrominance $(x'_0, y'_0)$ correspondantes dans le plan de chrominance de l'espace-couleur chrominance/luminance, procédé caractérisé en ce que:

h) on effectue la première transformation de façon que le lieu de couleur transformé $(F'_0)$ se situe sur l'un des segments d'axe d'un système de coordonnées de couleur X'Y' (25) dans le plan de chrominance et on enregistre les coefficients de transformation nécessaires à cet effet pendant l'inscription d'extraits de couleur,

i) on transforme les lieux de couleur (F) des teintes de couleur du modèle détectées, en continu par une seconde transformation des signaux de valeurs de mesure de couleur (R, G, B) en des valeurs de chrominance (x', y') avec les coefficients de transformation déterminés précédemment dans le plan de chrominance,

j) on sélectionne celles des valeurs de chrominance (x', y') dont les lieux de couleur (F') transformés, correspondants se situent dans la même moitié du système de coordonnées de couleur (x', y') (25) que le lieu de couleur $(F'_0)$ transformé de la teinte de couleur d'extrait $(T_0)$,

k) on forme un signal de teinte de couleur (T') à l'aide du quotient des valeurs de chrominance (x', y') choisies, quotient qui correspond respectivement à la tangente de l'angle $(\beta)$ défini par le segment d'axe correspondant et une ligne de jonction entre le saut de coordonnées et le lieu de couleur transformé (F') de la teinte de couleur (T') étant une mesure de l'amplitude de la déviation respective de la teinte de couleur modèle détectée par rapport à la teinte de couleur d'une couleur d'extrait $(T_0)$,

l) à partir d'un signal de commande auxiliaire (H) essentiellement constant et du signal de teinte de couleur (T'), on forme un signal de reconnaissance de teinte de couleur (E') dont la valeur est maximale pour la détection de la teinte de couleur d'extrait et dont la valeur est nulle à la détection d'une teinte de couleur maximale prédéterminée par rapport à la teinte de couleur d'extrait $(T_0)$, de manière à délimiter une plage de reconnaissance de teintes de couleur (26) en forme de secteurs autour du segment d'axe concerné ou de la teinte de couleur d'extrait $(T_0)$, et

m) on utilise le signal de reconnaissance de teinte de couleur (E') pour inscrire l'extrait de couleur de la teinte de couleur d'extrait $(T_0)$ sélectionnée pour être combiné avec le signal de couleur corrigé (F).

2. Procédé selon la revendication 1, caractérisé en ce que la combinaison du signal de couleur corrigé (F) et du signal de reconnaissance de teinte de couleur (E') pour donner un signal d'extrait (A) en mélangeant le signal de couleur (F) corrigé et la valeur de tension normalisée (W) suivant un rapport de mélange dépendant de la distance qui sépare une teinte de couleur détectée dans le modèle de couleur de la teinte de couleur d'extrait $(T_0)$ choisie, et le signal d'extrait (A) est égal au signal de couleur (F), corrigé lors de la détection de la teinte de couleur d'extrait $(T_0)$ alors que pour la détection d'une teinte de couleur située à l'extérieur de la plage de reconnaissance de teintes de couleur (26), ce signal est égal à la valeur de tension normalisée (W).

3. Procédé selon la revendication 2, caractérisé en ce que la valeur de tension normalisée (W) correspond au niveau de blanc sur lequel on a équilibré les signaux de grandeurs de mesure de couleur (R, G, B) lors de la mesure des points-image neutres les plus clairs du modèle de couleur.

4. Procédé selon l'une quelconque des revendications 1 à 3, caractérisé en ce que le signal de couleur (F) corrigé est choisi pour être combiné au signal de reconnaissance de teinte de couleur (E') et est celui qui restitue le mieux le profil de couleur de la teinte de couleur d'extrait $(T_0)$.

5. Procédé selon l'une quelconque des revendications 1 à 4, caractérisé en ce que les signaux de couleur corrigés (F) correspondent aux grandeurs d'extrait de couleur (Y, M, C) obtenues par correction de couleur pour l'impression mélangée polychrome.

6. Procédé selon l'une quelconque des revendications 1 à 5, caractérisé en ce que les grandeurs de couleur $(R_0, G_0, B_0)$ de la teinte de couleur d'extrait $(T_0)$ sont déterminées par mesure opto-électronique d'une teinte de couleur correspondante dans le modèle de couleur.

7. Procédé selon l'une quelconque des revendications 1 à 6, caractérisé en ce que la déviation maximale prédéterminée de la teinte de couleur par rapport à la teinte de couleur d'extrait $(T_0)$ ou encore l'angle d'ouverture de la plage de reconnaissance de teintes de couleur (26) se règlent par modification de l'amplitude des grandeurs de chrominance (y') perpendiculairement au segment d'axe concerné du signal de teinte de couleur $(T_0)$ ou du signal de commande auxiliaire (H).

8. Procédé selon l'une quelconque des revendications 1 à 7, caractérisé en ce que le signal de reconnaissance de teinte de couleur (E') s'obtient en formant la différence entre le signal de commande auxiliaire (H) et le signal de teinte de couleur (T').

9. Procédé selon l'une quelconque des revendications 1 à 8, caractérisé en ce que la première transformation des grandeurs de couleur $(R_0, G_0, B_0)$ de la teinte de couleur d'extrait $(T_0)$ donne les grandeurs de chrominance $(x'_0, y'_0)$,

a) par un matriçage des grandeurs de mesure de couleur $(R_0, G_0, B_0)$ en des grandeurs de chrominance $(x_0, y_0)$ d'un système de coordonnées de couleur XY (24) dans le plan chrominance suivant une transformation de l'espace-couleur RGB dans l'espace-couleur chrominance/luminance suivant les équations:

$$x_0 = a_{11} R_0 + a_{12} G_0 + a_{13} B_0$$
$$y_0 = a_{21} R_0 + a_{22} G_0 + a_{23} B_0$$

b) et par une transformation de la position du lieu de couleur $(F_0)$ de la teinte de couleur d'extrait $(T_0)$ à l'intérieur du plan de chrominance suivant une rotation de coordonnées des grandeurs de chrominance $(x_0, y_0)$ du système de coordonnées de couleur XY (24) en des grandeurs de chrominance $(x'_0, y'_0)$ dans le système de coordonnées de couleur X'Y' (25) tourné d'un angle $(\alpha_0)$ par rapport au système de coordonnées de couleur XY (24) suivant la rotation de l'espace-couleur chrominance/luminance autour de l'axe de luminance (Z) suivant les équations:

$$x'_0 = x_0 \cos \alpha_0 + y_0 \sin \alpha_0$$
$$y'_0 = - x_0 \sin \alpha_0 + y_0 \cos \alpha_0$$

l'angle $(\alpha_0)$ constituant le coefficient de transformation étant déterminé de façon que le lieu de couleur $(F'_0)$ transformé de la teinte de couleur d'extrait $(T_0)$ se situe sur l'un des segments d'axe du système de coordonnées de couleur X'Y' (25).

10. Procédé selon l'une quelconque des revendications 1 à 9, caractérisé en ce que la seconde transformation des grandeurs de mesure de couleur (R, G, B) des teintes de couleur des couleurs de modèle détectées en des grandeurs de chrominance (x', y') des lieux de couleur transformés (F') se fait par:

a) matriçage des grandeurs de mesure de couleur (R, G, B) en des grandeurs de chrominance (x, y) du système de coordonnées de couleur XY (24) dans le plan de chrominance suivant une transformation de l'espace couleur RGB dans l'espace-couleur chrominance/luminance suivant les équations:

$$x = a_{11} R + a_{12} G + a_{13} B$$
$$y = a_{21} R + a_{22} G + a_{23} B$$

b) et par une rotation des coordonnées des grandeurs de chrominance (x, y) du système de coordonnées de couleur XY (24) en des grandeurs de chrominance (x', y') du système de coordonnées de couleur X',Y' (25) suivant l'angle $(\alpha_0)$ ainsi déterminé suivant les équations:

$$x' = x \cos \alpha_0 + y \sin \alpha_0$$
$$y' = - x \sin \alpha_0 + y \cos \alpha_0$$

11. Procédé selon la revendication 9, caractérisé en ce que l'angle $(\alpha)$ se modifie par une opération d'équilibrage automatique jusqu'à ce que l'une des grandeurs de chrominance $(x'_0$ ou $y'_0)$ du système de coordonnées de couleur X'Y' (25) soit nulle et l'angle $(\alpha_0)$ ainsi trouvé est enregistré comme coefficient de transformation.

12. Procédé selon l'une quelconque des revendications 1 à 11, caractérisé en ce que le signal de teinte de couleur (T') est transformé avant d'être combiné au signal de commande auxiliaire (H).

13. Procédé selon l'une quelconque des revendications 1 à 12, caractérisé en ce que:

a) à partir des grandeurs de mesure de couleur (R, G, B) on forme un signal de saturation de couleur (S') et à partir d'au moins l'une des grandeurs de mesure de couleur (R, G, B) on forme un signal de luminance (L'),

b) on délimite l'amplitude du signal de saturation de couleur (S') et du signal de luminance (L') en fonction de grandeurs prédéterminées de saturation et de clarté pour obtenir un signal de commande de saturation de couleur (S*) et un signal de commande de luminance (L*) et,

c) on combine au moins l'un des signaux de commande (S* ou L*) au signal de commande de teinte de couleur (T*) et au signal de commande auxiliaire (H) pour régler le signal de reconnaissance de teinte de couleur (E') en plus en fonction de la saturation de couleur et/ou de la clarté.

14. Procédé selon l'une quelconque des revendications 1 à 13, caractérisé en ce que pour limiter les couleurs d'extrait,

a) on combine le signal de commande auxiliaire (H) et le signal de commande de teinte de couleur (T*) avec le signal de commande de saturation de couleur (S*) et le signal de commande de luminance (L*) pour former un signal de reconnaissance de couleur (E''), et

b) on règle la limitation d'amplitude des signaux de commande (S* ou L*) de façon que le signal de reconnaissance de couleur (E'') soit différent de zéro seulement à l'intérieur d'une plage de reconnaissance de couleurs, dans l'espace pour la couleur de l'extrait.

15. Procédé selon la revendication 14, caractérisé en ce qu'on forme la somme du signal de commande de teinte de couleur (T*), du signal de commande de saturation de couleur (S*) et du signal de commande de luminance (L*) et on retranche ce signal de somme du signal de commance auxiliaire (H) pour obtenir le signal de reconnaissance de couleur (E'').

16. Procédé selon l'une quelconque des revendications 1 à 15, caractérisé en ce que pour former le signal de saturation de couleur (S'),

a) on sélectionne les grandeurs de mesure de couleur maximales et minimales respectives des grandeurs de mesure de couleur (R, G, B) et,

b) on forme le signal de saturation de couleur (S') à partir de la différence des grandeurs de mesure de couleur maximales et minimales.

17. Procédé selon l'une quelconque des revendications 1 à 16, caractérisé en ce que le signal de commande auxiliaire (H) est une fonction des grandeurs de saturation des couleurs détectées dans le modèle de couleur.

18. Procédé selon la revendication 17, caractérisé en ce que le signal de commande auxiliaire (H) est nul pour la grandeur de saturation de couleur nulle jusqu'à une grandeur de saturation de couleur limite ($x_g$) qui définit l'extension de la plage des gris autour de l'axe de luminance (Z) de l'espace-couleur chrominance/luminance et à une valeur constante ($H_0$) pour les grandeurs de saturation comprises entre la grandeur de saturation de couleur limite ($x_g$) et les grandeurs de saturation de couleur maximales.

19. Installation pour réaliser des extraits de couleur d'un modèle en couleur pour l'impression avec des couleurs singulières, installation comprenant:

a) un organe de détection opto-électronique (3) du modèle en couleur pour former des signaux de grandeurs de mesure de couleur,

b) un circuit de reconnaissance (5) relié à l'organe de détection (3) pour délimiter une plage de reconnaissance et pour former un signal de reconnaissance avec,

c) un circuit de transformation (22, 23) qui est relié à l'organe de détection opto-électronique (3) et transforme les grandeurs de mesure de couleur ($R_0$, $G_0$, $B_0$ ou R, G, B) en des grandeurs de chrominance ($x'_0$, $y'_0$ ou x', y') d'un système de coordonnées de couleur X', Y' (25) dans le plan de chrominance de l'espace-couleur chrominance/luminance ainsi que:

d) un circuit de sélection et d'amplitude (31, 32) relié au circuit de transformation (22, 23) pour sélectionner les données de l'amplitude des grandeurs de chrominance (x', y'),

e) un circuit de correction (8, 9) relié à l'organe de détection (3) pour obtenir des signaux de couleur corrigés à partir des signaux de grandeurs de mesure de couleur,

f) un circuit de combinaison (12) relié au circuit de correction (8, 9) et au circuit de reconnaissance (5) pour former un signal d'inscription et

g) un organe d'inscription (14) relié au circuit de combinaison (12) pour inscrire les extraits de couleur point par point et ligne par ligne, caractérisée en ce que le circuit de reconnaissance (5) comporte des composants supplémentaires suivants:

h) des moyens de réglage (34) pour délimiter une plage de reconnaissance de teintes de couleur, moyens qui sont reliés au circuit de sélection et de formation d'amplitude (31, 33),

i) un étage-diviseur (37) relié aux moyens de réglage (34) pour former un signal de teinte de couleur (T') à partir des amplitudes des grandeurs de chrominance choisies,

j) un générateur de signal (44) pour former un signal de commande auxiliaire (H) et

k) un étage de combinaison (21) relié à l'étage-diviseur (37) et au générateur de signal (44) pour former un signal de reconnaissance de teinte de couleur (E') à partir du signal de commande auxiliaire (H) et du signal de teinte de couleur (T'),

l) et en ce que le circuit de combinaison (12) est constitué par un étage-mélangeur.

20. Installation selon la revendication 1, caractérisée en ce que l'étage de combinaison (21) est un étage de différence.

21. Installation selon la revendication 19, caractérisée par un étage de formation de signal (38) du signal de teinte de couleur (T') entre l'étage-diviseur (37) et l'étage de combinaison (21).

22. Installation selon l'une quelconque des revendications 19 à 21, caractérisée en ce que le circuit de reconnaissance de couleur (5) pour délimiter les extraits de couleur comporte en outre les éléments suivants:

a) un générateur de signal de saturation de couleur (46) et un générateur de signal de luminance (45) reliés à l'organe de détection opto-électronique (3) pour obtenir un signal de saturation de couleur (S') et un signal de luminance (L') à partir des signaux de grandeurs de mesure de couleur (R, G, B),

b) des étages-limiteurs réglables (48, 49) qui sont montés en aval des générateurs de signaux (45, 46) pour former un signal de commande de saturation de couleur (S*) et un signal de commande de luminance (L*) par limitation d'amplitude et,

c) des moyens de commutation (42, 43) qui sont reliés aux étages de limitation (48, 49) et à l'étage de combinaison (21) pour combiner sélectivement le signal de commande de saturation de couleur (S*) et/ou le signal de commande de luminance (L*) avec le signal de teinte de couleur (T') et le signal de commande auxiliaire (H) pour former le signal de reconnaissance de couleur (E'').

23. Installation selon l'une quelconque des revendications 19 à 22, caractérisée en ce que l'étage de mélange (12) comporte des composants suivants:

a) un multiplicateur (60) pour former le produit du signal de couleur corrigé (F) et du signal de reconnaissance (E'; E''),

b) une source de tension (59) pour régler la valeur de tension normalisée (W);

c) un soustracteur (63, 64) pour former la différence entre la grandeur de tension normalisée (W) et le signal de reconnaissance (E', E''), et

d) un additionneur (61) pour former le signal d'inscription (A), additionneur auquel sont reliés le multiplicateur (60) et le soustracteur (63, 64).

Fig.1

0 144 462

*Fig.2*

*Fig.3*

(Farbton-Abweichung)

*Fig.4*

Fig.5

Fig.6

Fig.7

Fig.8

Fig.9

Fig.10b

Fig.10a

Fig.11

Fig.12